(19) **Europäisches Patentamt European Patent Office Office européen des brevets**

(11) **EP 4 783 494 A1**

(12) **EUROPEAN PATENT APPLICATION**
published in accordance with Art. 153(4) EPC

(43) Date of publication:
29.07.2026 Bulletin 2026/31

(21) Application number: 24869683.3

(22) Date of filing: 19.04.2024

(51) International Patent Classification (IPC):
*H04L 1/00* (2006.01)

(86) International application number:
PCT/CN2024/088869

(87) International publication number:
WO 2025/066114 (03.04.2025 Gazette 2025/14)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 28.09.2023 CN 202311286337

(71) Applicant: ZTE Corporation
Shenzhen, Guangdong 518057 (CN)

(72) Inventors:
• WANG, Xiyu
  Shenzhen, Guangdong 518057 (CN)
• GENG, Peng
  Shenzhen, Guangdong 518057 (CN)
• LU, Zhaohua
  Shenzhen, Guangdong 518057 (CN)
• XIAO, Huahua
  Shenzhen, Guangdong 518057 (CN)

(74) Representative: Ziebig Hengelhaupt Intellectual
Property Attorneys
Patentanwaltskanzlei PartGmbB
Leipziger Straße 49
10117 Berlin (DE)

(54) **TRANSMISSION METHOD AND APPARATUS FOR CHANNEL STATE INFORMATION REPORT CONFIGURATION, AND STORAGE MEDIUM**

(57) Provided in the embodiments of the present disclosure are a transmission method and apparatus for a channel state information(CSI) report configuration, and a storage medium. The transmission method for CSI report configuration comprises: acquiring a CSI report configuration, wherein the CSI report configuration comprises parameter information of L CSI reports, the L CSI reports corresponding to C reference signal resource sets, and both L and C being positive integers greater than 1; and transmitting the CSI report configuration.

FIG. 2

**Description**

The present disclosure claims priority to a Chinese patent application No. 202311286337.9, filed on September 28, 2023, the entire content of which is incorporated herein by reference.

TECHNICAL FIELD

The present disclosure relates to the technical field of communication, and in particular, to a transmission method and apparatus for channel state information report configuration, and a storage medium.

BACKGROUND

Wireless communication systems are widely applied in people's daily life and production. For example, wireless communication systems are applied in video transmission, voice transmission, positioning, machine-to-machine communication and device-to-device communication in the industrial field, and vehicle-to-other-device communication in vehicle-to-everything. Channel state information (CSI) is important information for improving the performance of wireless communication systems. A terminal sends a CSI report to a network side device; and the network side device, after receiving the CSI report sent from the terminal, acquires the CSI, and performs scheduling and data transmission based on the acquired CSI.

SUMMARY

In a first aspect, the present disclosure provides a transmission method for channel state information report configuration. The transmission method for channel state information report configuration includes: acquiring a channel state information (CSI) report configuration, wherein the CSI report configuration comprises parameter information of L CSI reports, the L CSI reports correspond to C reference signal resource sets, and both L and C are positive integers greater than 1; sending the CSI report configuration.

In a second aspect, the present disclosure provides a transmission method for channel state information report configuration. The transmission method for channel state information report configuration includes: receiving a CSI report configuration, wherein the CSI report configuration comprises parameter information of L CSI reports, the L CSI reports correspond to C reference signal resource sets, and both L and C are positive integers greater than 1.

In a third aspect, the present disclosure provides a communication apparatus. The communication apparatus includes: an acquiring module, configured to acquire a channel state information (CSI) report configuration, wherein the CSI report configuration comprises parameter information of L CSI reports, the L CSI reports correspond to C reference signal resource sets, and both L and C are positive integers greater than 1; a sending module, configured to send the CSI report configuration.

In a fourth aspect, the present disclosure provides a communication apparatus, and the communication apparatus includes: a receiving module, configured to receive a CSI report configuration, wherein the CSI report configuration comprises parameter information of L CSI reports, the L CSI reports correspond to C reference signal resource sets, and both L and C are positive integers greater than 1.

In a fifth aspect, the present disclosure provides a communication apparatus, and the communication apparatus includes: a processor and a memory; the memory stores instructions executable by the processor; the processor is configured to, upon executing the instructions, enable the communication apparatus to implement any one of the methods provided in the first aspect or the second aspect described above.

In a sixth aspect, the present disclosure provides a computer-readable storage medium, and the computer-readable storage medium stores computer instructions, where the computer instructions, upon running on a computer, cause the computer to perform any one of the methods provided in the first aspect or the second aspect.

In a seventh aspect, the present disclosure provides a computer program product containing computer instructions, where the computer instructions, upon running on a computer, cause the computer to perform any one of the methods provided in the first aspect or the second aspect.

BRIEF DESCRIPTION OF THE DRAWINGS

The drawings are provided to further understand the technical solutions of the present disclosure and constitute a part of the specification, and are used together with the embodiments of the present disclosure to explain the technical solutions of the present disclosure and do not constitute a limitation on the technical solutions of the present disclosure.

FIG. 1 is an architecture schematic diagram of a communication system according to the embodiments of the present disclosure.
FIG. 2 is a flowchart of a transmission method for channel state information report configuration according to the embodiments of the present disclosure.
FIG. 3 is a flowchart of another transmission method for channel state information report configuration according to the embodiments of the present disclosure.
FIG. 4 is a composition schematic diagram of a communication apparatus according to the embodiments of the present disclosure.
FIG. 5 is a structural schematic diagram of a communication apparatus according to the embodiments of the present disclosure.

## DETAILED DESCRIPTION

The technical solutions in the embodiments of the present disclosure will be clearly and completely described below with reference to the drawings in the embodiments of the present disclosure, and it is obvious that the described embodiments are only a part of the embodiments of the present disclosure, not all of the embodiments. Based on the embodiments in the present disclosure, all other embodiments obtained by those ordinary skilled in the art without creative work belong to the scope of protection in the present disclosure.

In the description of the present disclosure, unless otherwise stated, "/" means "or", for example, A/B may mean A or B. The "and/or" herein is merely a description of an association relationship of associated objects, indicating that three relationships may exist, and for example, A and/or B may indicate: only A, only B, and both A and B. In addition, "at least one" means one or more, and "multiple/plurality of" means two or more than two. The terms such as "first", "second" do not limit the number and execution order, and the terms such as "first", "second" do not necessarily indicate that they limit different items.

It should be noted that, in the present disclosure, terms such as "exemplary (exemplarily)", or "for example (such as, e.g.)" are used to indicate an example, an illustration or a description. Any embodiment or design solution described with "exemplary (exemplarily)", or "for example (such as, e.g.)" in the present disclosure should not be interpreted as being more preferred or advantageous than other embodiments or design solutions. Rather, the use of the term "exemplary (exemplarily)", or "for example (such as, e.g.)" is intended to present a related concept in a specific manner.

Due to factors such as movement of a user, switching of communication scenarios, switching of cells, or obstacles in an environment, a channel environment may change over time, and therefore channel state information may also change accordingly. For different channel environments and different transmission requirements, some terminals need to report channel state information in different forms on some slots according to needs, and some terminals need a cooperation of CSI reports of multiple different slots to jointly complete a content of a report. For these problems, in some technologies, a new higher layer signaling is needed to update a parameter of a CSI report configuration. This may lead to large signaling overhead and/or generate large signaling delay. The technical solutions provided in the embodiments of the present disclosure may be applied to various mobile communication networks, for example, a New Radio (NR) mobile communication network adopting 5th generation mobile communication technology (5th generation mobile technology, 5G), a future mobile communication network (including but not limited to various 6th generation mobile communication technology (6G)), or multiple communication fusion systems, etc., which are not limited in the embodiments of the present disclosure.

In the embodiments of the present disclosure, a network architecture of a mobile communication network (including but not limited to 3G, 4G, 5G and future mobile communication networks) may include a network side device (e.g., including but not limited to a base station) and a receiving side device (e.g., including but not limited to a terminal). Moreover, it should be understood that, in this example, in a downlink, a first communication node (which may also be referred to as a first communication node device) may be a base station side device, and a second communication node (which may also be referred to as a second communication node device) may be a terminal side device. Of course, in an uplink, the first communication node may also be a terminal side device, and the second communication node may also be a base station side device. For two communication nodes in a device-to-device communication, both the first communication node and the second communication node may be base stations or terminals. The first communication node and the second communication node may be abbreviated as a first node and a second node, respectively.

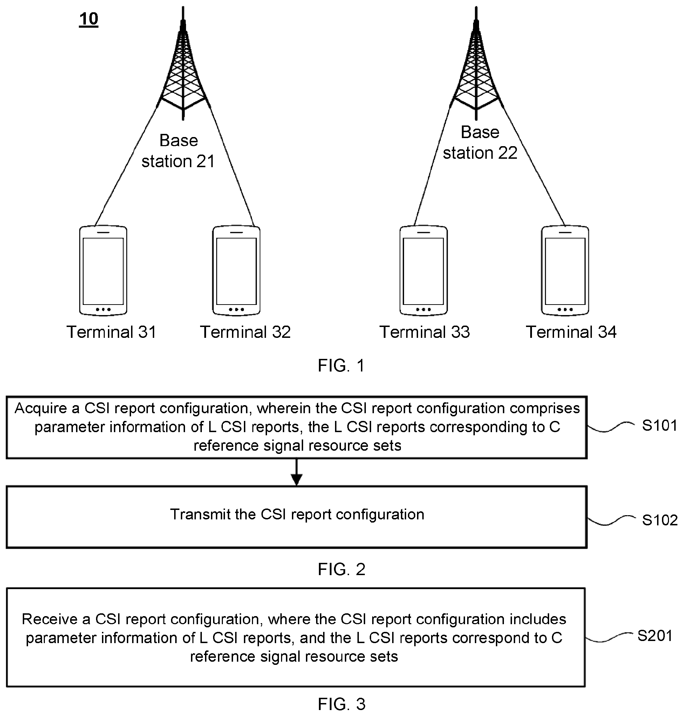

Exemplarily, taking a network side device as a base station and a receiving side device as a terminal as an example, FIG. 1 shows an architecture schematic diagram of a communication system according to the embodiments of the present disclosure. As shown in FIG. 1, a communication system 10 includes multiple base stations (e.g., a base station 21 and a base station 22) and multiple terminals (e.g., a terminal 31, a terminal 32, a terminal 33 and a terminal 34). The multiple base stations and the multiple terminals may be in a communication connection. A base station may provide a network service to a terminal of a cell, or may simultaneously provide network services to terminals of multiple cells.

In some embodiments, the base station may be a base station in long term evolution (LTE) or long term evolution advanced (LTEA) or an evolutional base station (evolutional node B, eNB or eNodeB), a base station device in a 5G network, or a base station in a future communication system, etc. The base station may include various network side devices such as various macro base stations, micro base stations, home base stations, wireless remote radio heads, reconfigurable intelligent surfaces (RISs), routers, wireless fidelity (WIFI) devices, or primary cells and secondary cells, etc.

In some embodiments, the terminal may be a device with a wireless transceiver function, which may be deployed on land (including indoor or outdoor, handheld, worn, or vehicle-mounted); may be deployed on water (e.g., a ship, etc.); or the terminal may also be deployed in the air (e.g., an airplane, a balloon, a satellite, etc.). The terminal may be a mobile phone, a tablet computer (Pad), a computer with a wireless transceiver function, a virtual reality (VR) terminal, an augmented reality (AR) terminal, a wireless terminal in industrial control, a wireless terminal in unmanned driving, a wireless terminal in remote medical, a wireless terminal in smart grid, a wireless terminal in transportation safety, a wireless terminal in smart city, a wireless terminal in smart home, etc. The embodiments of the present disclosure do not limit the application scenarios. The terminal sometimes may also be referred to as a user, user equipment (UE), access terminal, UE unit, UE station, mobile station, mobile platform, remote station, remote terminal, mobile device, UE terminal, wireless communication device, UE agent, UE apparatus, etc., which is not limited to the embodiments of the present disclosure.

In some embodiments, higher layer signaling includes but is not limited to radio resource control (RRC), media access control element (MAC CE), and other signaling other than physical layer signaling, for example, LTE Positioning Protocol (LPP) higher layer signaling, NR Positioning Protocol A (NRPPa) higher layer signaling, LTE Positioning Protocol A (LPPa) higher layer signaling, where the LPP is also applied in the NR positioning protocol. Physical layer signaling may also be transmitted between a base station and a terminal, for example, physical layer signaling may be transmitted on a physical downlink control channel (PDCCH), and physical layer signaling may be transmitted on a physical uplink control channel (PUCCH), between a base station and a terminal.

In some embodiments, an indicator of a parameter may also be referred to as an index or an identifier (ID), and indicator, identifier, and index are equivalent concepts. For example, a resource identifier of a wireless system may also be referred to as a resource indicator, or a resource index. A resource index of a wireless system includes but is not limited to at least one of: indexes, corresponding to a reference signal resource, a reference signal resource group, a reference signal resource configuration, a channel state information (CSI) report, a CSI report set, a terminal, a base station, a panel, a neural network, a sub-neural network, a neural network layer, a precoding matrix, a beam, a transmission mode, a sending mode, a reception mode, a module, a model, a function module, a function, etc. A base station may indicate an identifier of a resource or a group of resources to a terminal through various higher layer signaling or physical layer signaling. A terminal may also feed back an identifier of a resource or a group of resources to a base station through higher layer signaling and/or physical layer signaling.

In some embodiments, a time instance refers to a time period, for example, it may be a slot. The slot may be a slot or a mini slot. A slot or a mini slot includes at least one symbol. A symbol refers to a time unit in a sub-frame, a frame, or a slot, for example, it may be an orthogonal frequency division multiplexing (OFDM) symbol, a single-carrier frequency division multiplexing multiple access (single-carrier frequency division multiple access, SC-FDMA) symbol, an orthogonal frequency division multiplexing multiple access (orthogonal frequency division multiple access, OFDMA) symbol, etc. In some embodiments or examples, a slot is taken as an example, and it may be replaced with an actual instance.

In some embodiments, a transmission includes sending or receiving, for example, sending data or a signal, receiving data or a signal.

In some embodiments, in order to calculate channel state information or perform channel estimation, mobility management, positioning, and the like, a base station or a terminal needs to send a reference signal (RS). The reference signal includes, but is not limited to, a channel state information reference signal (channel-state information reference signal, CSI-RS), the channel state information reference signal including a zero power CSI-RS (ZP CSI-RS) and a non-zero power CSI-RS (NZP CSI-RS); a channel state information-interference measurement (CSI-IM) signal; a sounding reference signal (SRS); a synchronization signal block (synchronization signals block, SSB); a physical broadcast channel (PBCH); and a synchronization signal block/physical broadcast channel (SSB/PBCH). The NZP CSI-RS may be used to measure a channel or measure interference. The CSI-RS may be used for tracking and may be referred to as a tracking reference signal (CSI-RS for Tracking, TRS), and the CSI-IM is generally used to measure interference, and the SRS is used to measure an uplink channel. In addition, a resource element (RE) set included in a time-frequency resource used to transmit a reference signal is referred to as a reference signal resource, for example, a CSI-RS resource, an SRS resource, a CSI-IM resource, or an SSB resource. Herein, an SSB includes a synchronization signal block and/or physical broadcast channel.

In some embodiments, in order to save signaling overhead and the like, multiple reference signal resources may be divided into multiple sets (for example, a CSI-RS resource set, a CSI-IM resource set, or an SRS resource set), the reference signal resource set includes at least one reference signal resource, and multiple reference signal resource sets may all come from a same reference signal resource setting (for example, a CSI-RS resource setting or an SRS resource setting, where the CSI-RS resource setting may be merged with a CSI-IM resource setting, both of which are referred to as a CSI-RS resource setting), to configure parameter information.

In some embodiments, a base station configures measurement resource information, and the measurement resource information is used to acquire various measurement parameters such as channel state information. The measurement resource information includes $C_N$ pieces of channel measurement resource (CMR) information and/or $C_M$ pieces of interference measurement resource (IMR) information, where $C_N$ and $C_M$ are positive integers. A base station configures the measurement resource information in a report configuration (report config) or a reporting setting. In some examples, a piece of channel measurement resource information includes at least one channel reference signal resource setting, for example, at least one CSI-RS resource setting or at least one SRS resource setting. A piece of interference measurement resource information includes at least one interference reference signal resource setting, for example, at least one CSI-IM resource setting. In some examples, a piece of channel measurement resource information includes at least one channel reference signal resource set, for example, at least one CSI-RS resource set or at least one SRS resource set. A piece of interference measurement resource information includes at least one interference reference signal resource set, for example, at least one CSI-IM resource set. In some examples, a piece of channel measurement resource information includes at least one channel reference signal resource, for example, at least one CSI-RS resource or at least one SRS resource. A piece of interference measurement resource information includes at least one interference reference signal resource, for example, at least one CSI-IM resource.

In some embodiments, a beam includes a transmission beam, a reception beam, a pair of reception beam and transmission beam, or a pair of transmission beam and reception beam. In some embodiments, a beam may be understood as a resource, for example, a reference signal resource, a transmitter spatial filter, a receiver spatial filter, a spatial filter, a spatial reception parameter, transmitter precoding, receiver precoding, an antenna port, an antenna weight vector, an antenna weight matrix, and the like. A beam index may be replaced with a resource index (for example, a reference signal resource index), because a beam may be bound in transmission with some resources in at least one domain of time domain, frequency domain, and code domain. A beam may also be a transmission (sending/receiving) mode, and the transmission mode here may include spatial division multiplexing, frequency domain/time domain diversity, beamforming, and the like. In addition, a base station may perform a quasi co-location (QCL) configuration on two reference signals, and inform a user end to describe a channel feature. The parameters involved in quasi co-location here at least include: Doppler spread, Doppler shift, delay spread, average delay, average gain, and a spatial parameter (Spatial Rx parameter). The spatial parameter may include a spatial reception parameter, angle information, a spatial correlation parameter of a reception beam, an average delay, and a correlation parameter of a time-frequency channel response (including phase information). The angle information may include at least one of: an angle of arrival (AOA) or an angle of departure (AOD). In a case where the angle information includes an azimuth angle and a pitch angle, the angle of arrival includes a zenith angle of arrival (ZOA) and an azimuth angle of arrival (azimuth angle of departure, AOD), and the angle of departure includes a zenith angle of departure (ZOD) and an azimuth angle of departure (AOA). Spatial filtering may be at least one of: a Discrete Fourier Transform (DFT) vector, a precoding vector, a DFT matrix, a precoding matrix, or a vector formed by a linear combination of multiple DFTs, or a vector formed by a linear combination of multiple precoding vectors. In some embodiments, a vector and a quantity that has a direction are interchangeable concepts. In some embodiments, a beam pair includes a combination of a transmission beam and a reception beam.

In some embodiments, a beam direction or a beam angle may correspond to and include at least one of: an angle of arrival (AOA), an angle of departure (AOD), a vector or a vector index formed by at least one angle of AOA and AOD, a Discrete Fourier Transform vector, a codeword in a codebook, a transmission beam index, a reception beam index, a transmission beam group index, or a reception beam group index. When the angle information includes an azimuth angle and a pitch angle, the angle of arrival includes a zenith angle of arrival and an azimuth angle of arrival, and the angle of departure includes a zenith angle of departure and an azimuth angle of departure.

In some embodiments, the communication node may select an information processing mode to process the obtained information (for example, channel information, channel matrix information, time-domain channel information, frequency-domain channel information, angle information, position information), so as to obtain an information processing result (referred to as a processing result for short). The processing result includes one or more of the above channel state information, or one or more of beam parameter information, or angle information, position information (for example, a coordinate), position parameter information. For example, the position parameter information includes but is not limited to at least one of: a reference signal time difference (RSTD), a relative time of arrival (RTOA), an angle of arrival (AOA), an angle of departure (AOD), a reception-transmission time difference (Rx-Tx time difference), a transmission-reception time difference (Tx-Rx time difference), a reference signal received power, multi-path information; the reception-transmission time difference includes a base station side reception-transmission time difference (gNB Rx-Tx time difference) and a terminal side reception-transmission time difference (UE Rx-Tx time difference); when the angle information includes an azimuth angle and a pitch angle, the angle of arrival includes a zenith angle of arrival (ZOA) and an azimuth angle of arrival (azimuth angle of departure, AOD), and the angle of departure includes a zenith angle of departure (ZOD) and an azimuth angle of departure (AOA); and a number of paths is added, the relative delay of the path is added, the power of the multi-path is added, the time domain response of the multi-path is added, and a real part and an imaginary part of the time domain response of the multi-path are added..

In some embodiments, the communication node may select an information processing mode to process the obtained information (for example, channel information, channel matrix information, time-domain channel information, frequency-domain channel information, angle information, position information), so as to obtain an information processing result. The processing result includes one or more of channel state information, or one or more of beam parameter information.

In some embodiments, the information processing mode may be a conventional information processing mode or various advanced information processing modes, and the advanced information processing modes include but are not limited to an information processing mode based on artificial intelligence (AI). AI may include the following types: machine learning (ML), deep learning, reinforcement learning, transfer learning, deep reinforcement learning, and meta learning, etc. In some examples, the information processing mode is implemented through an artificial intelligence network (or referred to as a neural network, or referred to as a neural network model, or referred to as a model).

In some embodiments, artificial intelligence (AI) includes a self-learning device, component, software, module, model, function module, functional function and the like with machine learning (ML), deep learning, reinforcement learning, transfer learning, deep reinforcement learning, meta learning, and the like. In some embodiments, artificial intelligence is implemented through an artificial intelligence network (or referred to as a neural network). A neural network includes multiple layers, and each layer includes at least one node. In an example, the neural network includes an input layer, an output layer, and at least one hidden layer. Each layer of the neural network includes but is not limited to at least one of a fully connected layer, a dense layer, a convolutional layer, a transposed convolutional layer, a direct connection layer, an activation function, a normalization layer, a pooling layer, etc. In some embodiments, each layer of the neural network may include a sub-neural network, such as a residual block (Residual Network block, or Resnet block), a dense network (Densenet Block), a recurrent network (Recurrent Neural Network, RNN), etc. The artificial intelligence network may be implemented through a model, and the model may include but is not limited to a model implemented based on a neural network. The neural network model includes a neural network model structure and/or a neural network model parameter, the neural network model structure may be referred to as a model structure for short, and the neural network model parameter may be referred to as a network parameter or a model parameter for short. Based on the model structure, a network architecture of the neural network, such as a number of layers, a size of each layer, an activation function, a connection situation, a convolution kernel size and a convolution step size, and a convolution type (for example, 1D convolution, 2D convolution, 3D convolution, dilated convolution, transposed convolution, separable convolution, grouped convolution, or atrous convolution, etc.), may be determined, while the network parameter is a weight value and/or a bias and its value corresponding to each network layer in the neural network model. Furthermore, a model structure may correspond to multiple different sets of neural network model parameter values to adapt to different scenarios. Furthermore, the neural network model parameter may be obtained through online training or offline training, for example, by inputting at least one sample and training the neural network model to obtain the neural network model parameter.

Exemplarily, a sample includes N features and M labels, where N is a positive integer, and M is an integer greater than or equal to 0. Furthermore, multiple samples may constitute a data set. In an example, a sample includes one feature and one label, such as a sample in supervised learning. In another example, a sample has only one feature and no label, such as a sample in unsupervised learning. In an example, a sample has multiple features and one label, such as a sample in a multi-input single-output supervised learning network model. In another example, a sample includes one feature and multiple labels, such as a sample in a single-input multi-output supervised learning network model. In some embodiments, a feature of a sample may be an array, and a label is also an array. The array may be a vector, a matrix, or a tensor with more than two dimensions. Each element in the array may be a discrete value or a real value, for example, a real value from 0 to 1 or a real value from -0.5 to 0.5.

In an example, normalization processing needs to be performed on elements in an array corresponding to a label or a feature, to facilitate faster convergence of the network model. Normalization refers to normalizing a value of an element in an array to a value within an interval greater than or equal to a and less than or equal to b. For example, $a = -0.5$, $b = 0.5$. Alternatively, $a = 0$, $b = 1$. In an example, an element in an array may be divided by an element with a largest absolute value among elements of this array to achieve normalization. In another example, an element in an array may be divided by a variance of elements of this array to achieve normalization. In an example, an element in an array may be divided by a fixed value (for example, a maximum value among all elements of all samples) to achieve normalization. In another example, an element in an array may be divided by a statistical value (for example, a statistical variance of all elements of all samples) to achieve normalization. For an index value, such as a beam index, a CRI, or an SSBRI, normalization may be implemented through one-hot encoding (One-Hot Encoding).

In some embodiments, a model refers to that the data flow from the original input to the output target of a sample passes through multiple linear or nonlinear components. The above model includes a neural network model, a non-artificial intelligence module for processing information or a model corresponding thereto, and a functional component or function that maps (including linear mapping and non-linear mapping) input information to output information. In some embodiments, each model corresponds to a model indicator (Model Indicator, Model ID) or a model identifier (Model ID). In some embodiments, a model identifier may also have one of the following other equivalent names or concepts: a model index, a first identifier, a function identifier, or a model indicator, etc.

Exemplarily, a model includes a model structure and model parameters. For example, if the model is a neural network model, the neural network model includes a neural network model structure and neural network model parameters, and the neural network model structure and neural network model parameters are used to describe a structure of the neural network and values of parameters of the neural network, respectively. A neural network model structure may correspond to multiple neural network model parameters, that is, the neural network model structure may be the same, but the corresponding parameter values of the neural network model may be different.

In some examples, a communication node may send a functionality or a functional index to another communication node, to inform the another communication node that it may process information by using an information processing mode corresponding to the functional index. A functionality may also be referred to as a functional module, a functional function, a functional mapping, a functional description, etc., and is used to describe a feature or a type of an information processing mode. The type of the information processing mode may include multiple types, such as an information processing mode for positioning, beam management, CSI prediction, beam prediction, or channel estimation, etc., and the feature of the information processing mode includes, but is not limited to, a scenario description to which the functionality adapts, an input parameter description, an output parameter description, and a type of a measurement parameter included in an output result. A functionality corresponds to one or more information processing modes, each information processing mode may be implemented by one or more models, or a functionality may be implemented by one or more models, or a functionality may be implemented by one or more information processing modes other than a model.

In some embodiments, especially during a high-frequency transmission, because a carrier frequency is relatively high and path loss is large, beamforming is necessary to concentrate energy for propagation in a direction toward the terminal, and thus, beam management is necessary. Beam management includes, but is not limited to, beam scanning, beam tracking, and beam recovery, and a core problem to be solved is how to acquire an accurate beam pair with as low control overhead as possible. Beam scanning includes transmitter beam scanning and/or receiver beam scanning. To reduce overhead of beam scanning, scanning may be performed in two phases. In some embodiments, beam training may include training in a first phase, a second phase, and a third phase. In the first phase, both a transmission beam and a reception beam are scanned simultaneously. In beam scanning in the second phase, one reception beam is fixed and different transmission beams are scanned. In the third phase, one transmission beam is fixed and different reception beams are scanned. In an example, for example, $N_T$ beams are transmitted, with fixed reception and a value of a repetition parameter being off, and then L1-RSRP or L1-SINR corresponding to the $N_T$ beams is measured, and beam parameter information corresponding to L beams thereof is selected for reporting. In an example, one beam is sent, with receiving with $N_R$ reception beams and the value of the repetition parameter being on, L1-RSRP or L1-SINR corresponding to the $N_R$ beams is measured, and beam parameter information corresponding to L beams thereof is selected for reporting; or if no reporting is performed, the terminal retains the beam parameter information corresponding to the L beams, such as information about optimal L reception beam indexes, etc. In a case where both $N_R$ and $N_T$ are very large, reference signal overhead corresponding to beam scanning is very large. Here, $N_R$ and $N_T$ are positive integers. By using an advanced beam prediction technology, reference signal overhead during beam scanning may be reduced. The advanced technology may include AI, or other future and existing non-AI technologies for beam prediction. Beam prediction includes spatial beam prediction and temporal beam prediction, or spatial-temporal beam prediction.

In some examples, for spatial beam prediction, an input is a beam parameter information group (a first beam parameter information array), the first beam parameter information group includes $L_0$ pieces of beam parameter information, and another beam information group (a second beam parameter information array) is predicted according to the $L_0$ pieces of beam parameter information, where the second beam information group includes $L_1$ beam parameter information. $L_1$ and $L_0$ are both positive integers. In some examples, $L_0 <= L_1$. Alternatively, $L_0$ may also be greater than $L_1$, in which case the second beam parameter information array includes beam parameter information corresponding to $L_1$ predicted preferred beams (for example, CRI and/or an SSBRI corresponding to the optimal $L_1$ beams, L1-RSRP and/or L1-RSRP and/or probability and confidence level corresponding to the $L_1$ beams, etc., where $L_1$ may be a positive integer such as 1, 2, 3, or 4). A beam may be a transmission beam, a reception beam, or a transmission and reception beam pair. Each beam may correspond to a beam number direction. In some examples, spatial beam prediction may be implemented by an AI module, for example, by a network model. Beam parameter information corresponding to $L_0$ beams is combined into a beam parameter information array (a first beam parameter information array) to input to a neural network, the neural network outputs a beam parameter information array (a second beam parameter information array) corresponding to $L_1$ beams, and indexes corresponding to L pieces of beam parameter information with the largest beam parameter information in the second beam parameter information array are determined as preferred beams. In some examples, the spatial beam prediction may also be implemented in a non-AI mode, for example, linear mapping, non-linear mapping, Wiener filtering, or other modes. In some examples, beams corresponding to the first beam parameter information group and the second beam parameter information group are beams with different types, where the beam types include, for example, a wide beam, a narrow beam, a regular beam, and an irregular beam, etc.

In some examples, in a process of temporal beam prediction, N first beam parameter information groups may be input, and M second beam parameter information groups are predicted according to the N first beam parameter information groups. Each first beam parameter information group includes $L_0$ pieces of beam parameter information, and each beam parameter information group of the M second beam parameter information groups includes $L_1$ pieces of beam parameter information, where N, M, L, $L_1$, and $L_0$ are all positive integers. Moreover, the beam may be a transmission beam, a reception beam, or a transmission and reception beam pair. In some examples, the number of elements of the N first beam parameter information groups may be different; in some examples, the number of elements of the M second beam parameter information groups may be different. Each beam may correspond to a beam number direction. Here, the N first beam parameter information groups are beam parameter information before a reference slot, and the M second beam parameter information groups are beam parameter information after the reference slot. In some examples, in a case where $L_0=L_1$, it is temporal beam prediction; in a case where $L_0<L_1$, it is spatial-temporal beam prediction. In some regression models, $L_0$ may also be greater than $L_1$, that is, an output of the model is M beam parameter information groups, in which each beam parameter information group includes beam parameter information corresponding to $L_1$ preferred beams (for example, CRI and/or SSBRI corresponding to the optimal $L_1$ beams, L1-RSRP and/or L1-RSRP and/or probability and confidence level corresponding to the $L_1$ beams, etc., where $L_1$ may be a positive integer such as 1, 2, 3, or 4). In some examples, temporal beam prediction may be implemented by an AI module, for example, by an. N beam parameter information groups are input, where each beam parameter information group includes $L_0$ pieces of beam network model parameter information, or the $N*L_0$ pieces of beam parameter information are combined into a larger beam parameter information array (a first beam parameter information array) to input to the network model, and the network model outputs M second beam parameter information groups, where each second beam parameter information group includes $L_1$ pieces of beam parameter information. The $M*L_1$ pieces of beam parameter information may also be combined into a beam parameter information array (a second beam parameter information array), and for beam parameter information of each group among the M groups of beams, an index corresponding to one or more largest pieces of beam parameter information thereof is determined as a preferred beam of that beam information group. In some examples, the temporal beam prediction may also be implemented in a non-AI mode, such as linear mapping or non-linear mapping mode, etc.

In some examples, the model parameter of the neural network is obtained through online training or offline training. For example, the neural network model parameter is trained by inputting at least one sample. The sample includes a feature and a label. In some examples, the feature is a first beam parameter information array, and the label is a second beam parameter information array. When training the network, the first beam parameter information array and the second beam parameter information array have a corresponding relationship, and in some embodiments, have a one-to-one corresponding relationship. During the network model deployment or testing phase, the prediction performance of the network may be known, by inputting the first beam parameter information group to the network model to output a predicted second beam parameter information array, and comparing the predicted second beam parameter information array with the second beam parameter information array corresponding to the label; and the neural network model parameter is trained based on the loss function of both.

In some examples, a transmission beam index and/or a reception beam index are numbered in an agreed manner to form a beam index. A beam index includes one of: a transmission beam index, a reception beam index, or a transmission and reception beam pair index. A beam index corresponds to a beam direction, or a vector or matrix corresponding to a beam direction. The terminal receives a reference signal (for example, CSI-RS, SSB, etc.) and measures beam parameter information corresponding to each beam, to obtain a beam parameter information array. Generally, a first beam parameter information array is a beam parameter information array formed by beam parameter information corresponding to a first beam set, and a second beam parameter information array is a beam parameter information array formed by beam parameter information corresponding to a second beam set. The first beam set is a subset of the second beam set; of course, a case where the first beam set and the second beam set come from different beam sets is also included, and for example, one comes from a wide beam, and the other comes from a narrow beam.

In some examples, a beam parameter information array is a one-dimensional array, for example, a vector. In some examples, a beam parameter information array is a two-dimensional array, for example, a matrix. In some examples, a beam parameter information array is an array with more than two dimensions, for example, a tensor. A vector and a matrix may also be regarded as special cases of a tensor.

In some examples, to better transmit data or a signal, the base station or the terminal needs to acquire a measurement parameter, where the measurement parameter may include channel state information or other parameters used to characterize a channel. The channel state information may include at least one of: a channel state information-reference signal resource indicator (CSI-RS Resource Indicator, CRI), a synchronization signal block resource indicator (Synchronization Signals Block Resource Indicator, SSBRI), a layer 1 reference signal received power (L1 Reference Signal Received Power, L1-RSRP or RSRP), a differential RSRP (Differential RSRP), a layer 1 reference signal signal-to-interference noise ratio (L1 Signal-to-Interference Noise Ratio, L1-SINR or SINR), a differential L1-SINR (Differential L1-SINR), a reference signal received quality (Reference Signal Received Quality, RSRQ), L1-RSRQ, a differential RSRQ, a channel quality indicator (Channel Quality Indicator, CQI), a precoding matrix indicator (Precoding Matrix Indicator, PMI), a layer indicator (Layer Indicator, LI), a rank indicator (Rank Indicator, RI), or precoding information. The precoding information includes first-type precoding information, for example, codebook-based precoding information, and the precoding matrix indicator is one type of codebook-based precoding information. The precoding information also includes a non-codebook-based implementation, for example, second-type precoding information. In an example, CSI that includes only first-type precoding information is referred to as first-type CSI; in an example, CSI that includes second-type precoding information is referred to as second-type CSI.

In some embodiments, the terminal and the base station transmit channel state information matched with channel information through first-type precoding information, and the first-type precoding information is precoding information formed based on a traditional channel feature matrix or quantized values of the feature matrix. For example, it is precoding information implemented by a codebook-based method, and as an example, the codebook is an N-antenna codebook in LTE, where N=2, 4, 8, 12, 16, 24, 32, etc., such as type I codebook, type II codebook, type II port selection codebook, enhanced type II codebook, enhanced type II selection codebook, Further enhanced type II selection codebook in NR. Here, the codebook includes L codewords, and its main idea is that the base station and the terminal store L codewords according to a specified formula, table, or dictionary in advance. In some examples, a codeword is a vector. In some examples, a codeword is a matrix, the matrix includes r columns, and each of the columns is also a vector. In some embodiments, each column of the matrix is mutually orthogonal. Here, a codeword matched with channel information includes but is not limited to at least one of: a codeword with a minimum distance from the channel information, a codeword with a maximum correlation to the channel information, a codeword with a minimum distance from an optimal right singular vector or matrix of the channel information, a codeword with a maximum correlation to an optimal right singular vector or matrix of the channel information, a codeword with a maximum signal to noise ratio calculated from the channel information, etc. L is an integer greater than 1, and generally, it is greater than the number of transmission antennas.

In some examples, the terminal and the base station transmit channel state information matched with the channel information through second-type precoding information, and the second-type precoding information is channel state information obtained based on AI. In an example, the base station and the terminal obtain the channel state information through an encoder of an autoencoder, where the autoencoder includes an encoder and a decoder, the encoder is at the terminal and the decoder is at the base station side. The terminal compresses the obtained channel information H through the encoder to obtain compressed H1, quantizes the compressed H1, and feeds quantized H1 back to the base station. The base station receives the quantized H1, dequantizes the quantized H1, inputs dequantized H1 to the decoder, and the decoder decompresses the dequantized H1 to recover H.

In some examples, the channel information is information for describing a channel environment between communication nodes, obtained according to a reference signal (e.g., CSI-RS), such as a time-domain channel matrix, a frequency-domain channel matrix. In some examples, the channel information is a complex number matrix, and the size of the channel matrix is related to the number Nt of transmission antennas, the number Nr of reception antennas, and resource elements (Resource Element, RE). For example, there is at least one Nr*Nt channel matrix on one physical resource block (Physical Resource Block)

In some embodiments, the beam parameter information is Layer 1 reference signal received power (L1-RSRP or RSRP) or differential RSRP corresponding to at least one beam. In some embodiments, the beam parameter information is Layer 1 reference signal signal to interference plus noise ratio (L1-SINR or SINR) or differential SINR corresponding to at least one beam. In some embodiments, the beam parameter information is reference signal received quality (RSRQ) corresponding to at least one beam. In some embodiments, the beam parameter information is a beam angle (at least one of AOA, ZOA, AOD, ZOD, etc., which are sometimes also referred to as horizontal angle of arrival, vertical angle of arrival, horizontal angle of departure, vertical angle of departure, respectively) corresponding to at least one beam. In some embodiments, the beam parameter information is a transmission beam index corresponding to at least one beam. In some embodiments, the beam parameter information is a reception beam index corresponding to at least one beam. In some embodiments, the beam parameter information is a transmission and reception beam pair index (referred to as beam pair index or beam pair for short) corresponding to at least one beam. In some embodiments, the beam parameter information is a beam domain received power map (Beam Domain Receive Power Map, BDRPM) corresponding to at least one beam. In some embodiments, the beam parameter information is a channel state information-reference signal resource indicator (CSI-RS Resource Indicator, CRI) corresponding to at least one beam. In some embodiments, the beam parameter information is a synchronization signal block resource indicator (Synchronization Signals Block Resource Indicator, SSBRI) corresponding to at least one beam, or other reference signal resource indicators, such as SRSRI (Sounding Reference Signal Resource Indicator). In some embodiments, the beam parameter information is a combination of at least two of the following beam parameter information corresponding to at least one beam: RSRP, RSRQ, SINR, beam angle, transmission beam index, reception beam index, beam pair index, CRI, SSBRI, etc. In some embodiments, the beam parameter information is a linear value of one of RSRP, RSRQ, SINR. In some embodiments, the beam parameter information is a logarithmic value or a decibel value (DB) of one of RSRP, RSRQ, SINR.

In some embodiments, the beam parameter information is obtained based on CSI-RS measurement. In some embodiments, the beam parameter information is obtained based on SSB measurement. In some embodiments, the beam parameter information is obtained based on SRS measurement.

In some examples, the beam parameter information is a subset of channel state information, that is, the beam parameter information belongs to the channel state information. The channel state information, in turn, belongs to a measurement parameter. In some examples, the measurement parameter, the channel state information, and the beam parameter information all belong to a measurement result, or a processing result, or a generated result.

In some examples, to transmit channel state information at the physical layer, the terminal and the base station define a CSI report (e.g., CSI report or CSI report config). The CSI report defines at least one of the following parameters: a time-frequency resource for feeding back CSI, a report quality (report Quantity) included in CSI, a time-domain type report ConfigType fed back by CSI, a channel measurement resource, an interference measurement resource, a measurement bandwidth size, and other information. The CSI report may be transmitted on an uplink transmission resource, and the uplink transmission resource includes PUSCH and PUCCH. The CSI report also includes time-domain characteristics, including a periodic CSI report (P-CSI), an aperiodic CSI report (AP-CSI), a semi-persistent CSI report (SP-CSI). Generally, the number of bits for P-CSI transmission is relatively small and transmitted on PUCCH, and the number of bits for A-CSI transmission is larger and usually transmitted on PUSCH, and SP-CSI may be transmitted based on PUSCH or may be transmitted based on PUCCH. P-CSI transmitted based on PUCCH is generally configured via higher-layer signaling (Radio Resource Control, RRC), SP-CSI transmitted based on PUCCH is also configured, activated, or deactivated via higher-layer signaling (RRC and/or MAC CE), while SP-CSI transmitted based on PUSCH is activated or deactivated via physical layer signaling (Downlink control information, DCI). A-CSI is triggered by DCI, and the DCI is generally transmitted on a physical downlink control channel (PDCCH).

In the embodiments of the present disclosure, feeding back CSI may also be referred to as transmitting CSI or sending CSI, for example, channel state information is carried on an uplink transmission resource for feedback or transmission. Both the uplink transmission resource and the corresponding CSI may be indicated by a channel state information report. In an example, transmitting a CSI report refers to transmitting the content that needs to be transmitted as indicated in the CSI report, including but not limited to channel state information. Here, the transmitting includes sending or receiving, and may also be replaced by feeding back or receiving. In an example, transmitting a CSI report refers to transmitting the content (including but not limited to channel state information) that needs to be transmitted as indicated in the CSI report, via an uplink transmission resource, where the transmitting includes sending or receiving, and may also be replaced by feeding back or receiving.

In some examples, the base station sends reference signals for channel measurement in N slots. The terminal measures, in at least one slot, the respectively received reference signals for channel measurement sent in the N slots. Channel information Hi (i=1, ..., N) of the corresponding slot is obtained according to the received reference signals for channel measurement sent in the N slots, respectively. Here, the N slots are slots before a reference slot. In some embodiments, the reference slot includes one of: a slot agreed upon by the base station and the terminal, or a current slot that is a slot for acquiring CSI; or a slot indicated by the base station; or a slot obtained by adding a fixed offset to a slot indicated by the base station; or a slot obtained by adding a fixed offset to a slot in which the terminal receives indication signaling of the base station.

In some examples, for a communication node to acquire channel state information in the future, a channel state reference resource (CSI reference resource) needs to be determined first. A CSI reference resource is a block of time-frequency resources, which is a slot in the time domain and a bandwidth for measuring CSI in the frequency domain. For example, in wideband measurement, the frequency domain granularity is an entire bandwidth for CSI measurement, and in subband measurement, the frequency domain granularity is a subband.

Therefore, the frequency domain of the CSI reference resource is relatively clear, and here only how the time domain of the CSI reference resource is determined is described. The slot in which the channel state reference resource (CSI reference resource) of the channel state information is located is n1. That is, the channel state information CSI is measured, by taking a channel measurement resource set and/or an interference measurement resource set earlier than n1 and closest to n1 as an object. $n1=n-n_{ref}$, $n = \left\lfloor n' \cdot \frac{2^{\mu_{DL}}}{2^{\mu_{UL}}} \right\rfloor$, where n' is a CSI reporting slot, $\mu_{DL}$ and $2^{\mu_{UL}}$ are a downlink carrier spacing and an uplink carrier spacing respectively, and n and $2^{\mu_{UL}}$ are positive integers. $n_{ref}$ is a value determined according to one of the following ways.

When the CSI report is a periodic or semi-persistent report and only one CSI-RS resource is configured for channel measurement, the value of $n_{ref}$ satisfies that: $n1=n-n_{ref}$ is the smallest of a valid downlink subframe and greater than or equal to $4 \cdot 2^{\mu_{DL}}$.

When the CSI report is a periodic or semi-persistent report and more than one CSI-RS resource is configured for channel measurement, the value of nref satisfies that: $n1=n-n_{ref}$ is the smallest of a valid downlink subframe and greater than or equal to $5 \cdot 2^{\mu_{DL}}$.

When the CSI report is an aperiodic report, the value of $n_{ref}$ satisfies that: $n-n_{ref}$ is a slot for triggering the CSI report, or when the CSI report is an aperiodic report, $n1=n-n_{ref}$ is the smallest of a valid downlink subframe and greater than or equal to $\left\lfloor Z'/N^{slot}_{symb} \right\rfloor$, where Z' represents a minimum delay requirement from a last symbol of the channel measurement resource to a first symbol of a resource carrying the CSI report, $N^{slot}_{symb}$ represents the number of symbols in a slot, and $\lfloor \ \rfloor$ represents rounding down. For ease of description, Z' is referred to as a first delay Z', and a second delay Z represents a minimum delay from a last symbol of a transmission resource (such as PDCCH) carrying physical signaling used to trigger an aperiodic CSI report to a first symbol of a resource (such as PUCCH or PUSCH) used to carry the CSI report.

In some embodiments, the antenna is a physical antenna. In some examples, the antenna is a logical antenna. In some examples, the port and the antenna may be interchangeable concepts. In some examples, the antenna is a transmission antenna. In some examples, the antenna is a reception antenna. In some examples, the antenna includes an antenna pair of a transmission antenna and a reception antenna. In some examples, the antenna may be a uniform linear array. In some examples, the antenna is a uniform planar array, for example, an array element/antenna including Ng rows and Mg columns, where Ng and Mg are positive integers. In some examples, the antenna is a uniform circular array. In some examples, the antenna may be a non-uniform linear array. In some examples, the antenna is a non-uniform planar array. In some examples, the antenna is a non-uniform circular array. In some examples, the antenna is a directional antenna. In some examples, the antenna is an omnidirectional antenna. In some examples, the antenna is a dual-polarized antenna. In some examples, the antenna is a single-polarized antenna.

As shown in FIG. 2, the present disclosure provides a transmission method for a channel state information report configuration, and the method includes the following S101 and S102.

In S101: acquire a CSI report configuration, where the CSI report configuration includes parameter information for L CSI reports, and the L CSI reports correspond to C reference signal resource sets.

Both L and C are positive integers greater than 1.

In some embodiments, the above L CSI reports corresponding to the C reference signal resources, includes but is not limited to the following scenarios, for example, a case where a reference signal resource set includes only one CSI resource. In some embodiments, the L CSI reports corresponding to C reference signal resource configurations, including but not limited to the following scenarios, for example, a case where a reference signal resource configuration includes only one CSI resource set.

In some embodiments, the above L CSI reports are periodic CSI reports or semi-persistent CSI reports. Alternatively, the above L CSI reports may also be aperiodic CSI reports. For an aperiodic CSI report, the first communication node may configure L CSI reports at a higher layer and perform one trigger or activation via one physical layer signaling.

In some embodiments, the CSI report configuration further includes configuration information of the C reference signal sets. In some instances, the configuration information of the C reference signal sets is configured by other higher layer signaling different from that of the CSI report configuration.

A reference signal resource set includes at least one reference signal resource. In some embodiments, the reference signal resource may include one or more CSI-RS resources and/or one or more SSB resources, etc.

In an implementation, each CSI report among the L CSI reports corresponds to a reference signal resource set.

Thus, the value of L is equal to the value of C. Exemplarily, the value of L may be a positive integer greater than 1, such as 2, 3, etc. Taking the value of L as 2 as an example, the first communication node may configure 2 CSI reports, each CSI report corresponds to a reference resource set, that is, the first communication node may also configure 2 reference resource sets corresponding to the 2 CSI reports.

In another implementation, a CSI report among the L CSI reports corresponds to N reference signal resource sets, M CSI reports among the L CSI reports each correspond to a reference signal resource set, N is an integer greater than 1, M is a positive integer, and L=M+1, C=N+M. In an example, for example, in temporal beam prediction, beam scanning on M prediction slots is completed jointly by configuring N+M reference signal resource sets and/or M+1 CSI reports at once. The base station sends reference signals on the reference signal resource sets on N slots, the terminal receives the reference signals on the reference signal resource sets on the N slots and performs measurement on them to obtain beam parameter information on the N slots, uses the beam parameter information of the N slots as an input to a model, to predict beam parameter information on M slots, and feeds back all or a part of the beam parameter information on the M slots via a CSI report. The base station receives the all or part of the beam parameter information on the M slots, and topK transmission beam scanning on the M slots is completed by sending reference signals on the M slots and the terminal performing reception, measurement, and CSI report feedback for the reference signals on the M slots.

In yet another implementation, a CSI report among the L CSI reports corresponds to N reference signal resource sets, 2*M CSI reports among the L CSI reports each correspond to a reference signal resource set. N is an integer greater than 1, M is a positive integer, L = 2*M + 1, and C = N + 2*M. In an example, among the 2*M reports, contents of M CSI reports have null values, that is, in their CSI reports, the report quality reportQuantity is None. CSI reporting is not performed on, but only CSI measurement (such as reception beam scanning and other operations) is performed on these M CSI reports, where M is a positive integer. In an example, the M CSI reports whose the CSI report quality are null values are M CSI reports whose CSI report indexes are odd among the 2M CSI reports. In an example, the M CSI reports whose the CSI report quality are null values are M CSI reports whose CSI report indexes are even among the 2M CSI reports. In an example, the M CSI reports whose the CSI report quality are null values are M CSI reports whose CSI report indexes are the smallest among the 2M CSI reports. In an example, the M CSI reports whose the report quality are null values are M CSI reports whose CSI report indexes are the largest among the 2M CSI reports.

In some embodiments, a CSI report is configured to report a null content, which indicates that the report quality reportQuantity in the CSI report is configured to None. For the terminal, if a CSI report is null, it will no longer feed back CSI-related content.

In an example, a transmission slot for an i-th CSI report among the L CSI reports is $T*i + p$, where p is a transmission slot of a first CSI report, T is a transmission interval between two CSI reports, i = 0, ..., L, L and T are positive integers, and p is an integer.

In an instance, the content of each CSI report of the L CSI reports includes but is not limited to at least one piece of beam parameter information. In an example, the content of a report among the L CSI reports includes but is not limited to at least one of: K L1-RSRPs, 1 or K CRIs, or 1 or K SSBRIs. In an example, the contents of M reports among the L CSI reports include but are not limited to at least one of: 1 L1-RSRP, 1 CRI, or 1 SSBRI. Furthermore, there are M reports with null contents, on which only reception beam scanning is performed.

In some embodiments, a CSI report configuration may include not only the parameter information of the L CSI reports aforementioned, but may also include configuration information of the C reference signal resource sets corresponding to the L CSI reports.

It should be noted that, in the process of spatial prediction for a transmission beam, spatial prediction for a pair of transmission and reception beams, temporal prediction for a transmission beam, or temporal prediction for a pair of transmission and reception beams, in order to improve prediction accuracy, at least K optimal beams may be predicted on each prediction slot. K is an integer greater than or equal to 1. In the process of transmitting, measuring these K predicted beams or beam pairs and finally determining an optimal transmission beam or beam pair, multiple CSI measurement and feedback processes are included. After the measurement and feedback of a CSI report are completed, the measurement and feedback of another CSI report may be configured via signaling. However, there is usually a large delay. Therefore, in the embodiments described above, the first communication node may include the aforementioned parameter information of the L CSI reports in a CSI report configuration. In this way, flexibility of channel state information reporting may be improved, without re-configuring CSI via higher layer signaling, thereby reducing signaling delay and/or signaling overhead.

In some embodiments, the first communication node may configure a CSI report configuration before a first slot. That is, the L CSI reports and/or the C reference signal resource sets are configured before the first slot.

The first slot satisfies any one of: a minimum slot for sending the L CSI reports; a slot for sending a first CSI report among the L CSI reports; a minimum slot for sending a reference signal resource in the C reference signal resource sets; a slot for sending a reference signal resource in a first reference signal resource set among the C reference signal resource sets.

In S102: send the CSI report configuration.

In some embodiments, the first communication node sends the CSI report configuration before or at the aforementioned first slot. That is, the first communication node sends the CSI report configuration corresponding to the L CSI reports and/or the configuration information of the C reference signal resource sets before the first slot. The first slot is the minimum slot for sending the L CSI reports, or the first slot is the slot for sending the first CSI report among the L CSI reports, or the first slot is the minimum slot for sending the reference signal resource in the C reference signal resource sets; or the first slot is the slot for sending the reference signal resource in the first reference signal resource set among the C reference signal resource sets.

In some embodiments, the method provided in the present disclosure may be applied in the process of spatial prediction for a transmission beam, spatial prediction for a pair of transmission and reception beams, temporal prediction for a transmission beam, or temporal prediction for a pair of transmission and reception beams.

Embodiment 1: spatial transmission beam prediction is performed, and spatial beam prediction is performed at the second communication node side.

In an example, taking an example where the second communication node may be a terminal and the first communication node may be a base station, in a case of spatial transmission beam prediction, the spatial beam prediction is performed at the second communication node side. In the entire beam prediction process, the entire beam space includes MA transmission beams, denoted as SetA. However, the prediction result obtained actually from spatial beam prediction is MB transmission beams, denoted as SetB. MB is less than MA, and both MB and MA are positive integers. The first communication node may configure L CSI reports and reference signal resource sets corresponding to the L CSI reports at slot T0, where slot T0 is before the aforementioned first slot. For example, in a CSI report configuration, parameter information of the L CSI reports is configured. An i-th CSI report among the L CSI reports corresponds to an i-th reference signal resource set, where i = 1, ..., L. Exemplarily, the reference signal resources in the reference signal resource set may be CSI-RS or SSB, etc. L may be an integer greater than or equal to 2. For example, the value of L may be 2, 3, etc.

Then, the first communication node sends reference signal resources corresponding to a first reference signal resource set at slot T1, and the second communication node may receive and measure the reference signal resources corresponding to the first reference signal resource set at or before slot T2, to obtain MB pieces of beam parameter information corresponding to the transmission beams in SetB. The aforementioned first slot may be slot T1, slot T2, or any time instant between slot T1 and slot T2.

Thus, the second communication node may perform spatial beam prediction based on the MB pieces of beam parameter information. Exemplarily, the second communication node may input the MB pieces of beam parameter information and/or the corresponding CRIs into a spatial beam model to predict MA pieces of beam parameter information, and acquire beam parameter information and/or corresponding CRIs of the preferred K transmission beams, based on the MA pieces of beam parameter information. Alternatively, the spatial beam model may directly predict the beam parameter information of the K preferred transmission beams or the CRIs corresponding to the K preferred transmission beams.

The second communication node may transmit a first CSI report in slot T2. Correspondingly, the first communication node may receive the first CSI report. The first CSI report includes the predicted beam parameter information and/or K CRIs corresponding to the K preferred transmission beams aforementioned.

In an implementation, the second communication node may also send a second CSI report.

Exemplarily, in slot T3 in which the pre-configured second reference signal resource set is located, the first communication node may transmit at least K reference signal resources by using K parameters in the first CSI report, e.g., the transmission beams corresponding to the CRIs, where each reference signal resource corresponds to a transmission beam.

Thus, the second communication node may receive K reference signal resources, perform measurement to obtain K pieces of beam parameter information, determine beam parameter information corresponding to an optimal transmission beam and a CRI corresponding to the optimal transmission beam based on the K pieces of beam parameter information; and transmit the second CSI report in slot T4. The second CSI report includes the determined beam parameter information and/or CRI corresponding to the optimal transmission beam. Correspondingly, the first communication node receives the second CSI report, decodes the second CSI report, to obtain the beam parameter information and/or CRI corresponding to the optimal transmission beam. Furthermore, scheduling and resource transmission may be performed based on the determined beam parameter information and/or CRI corresponding to the optimal transmission beam.

In another implementation, the second communication node no longer sends the second CSI report.

In an example, the first communication node cannot send the aforementioned reference signal resources in the second reference signal resource set in slot T3, due to reasons such as resource conflict or scheduling too late, and thus the second communication node no longer sends the second CSI report. The first communication node may send signaling to the second communication node to indicate the terminal not to send the second CSI report, so that the second communication node, after receiving the signaling, does not perform the measurement and feedback corresponding to the second CSI report.

In another example, in a case where the value of K is 1, for example, there is only one value of the K preferred CRIs fed back by the second communication node, the second communication node no longer sends the second CSI report. Alternatively, in a case where the value of K is greater than or equal to 2, the first communication node may transmit the second reference signal resource set in slot T3, and then the second communication node may send the second CSI report.

In the embodiments of the present disclosure, T0, T1, T2, T3, and T4 are all integers, and $T1 \geq T0$, $T2 \geq T1$, $T3 \geq T2$, $T4 \geq T3$.

In some embodiments, the number of reference signal resources in the second reference signal resource set configured by the first communication node may be greater than K.

Exemplarily, in the case where the number of reference signal resources in the second reference signal resource set configured by the first communication node is greater than K, the first communication node may determine K reference signal resources from the second reference signal resource set, to send them to the second reference signal. For example, the first communication node may determine K reference signal resources with the smallest resource index, K reference signal resources with the largest reference signal resource index, or K reference signal resources starting from a reference signal resource index, or K reference signal resources agreed upon by the first communication node and the second communication node, or equally spaced K reference signal resources, etc.

In some embodiments, prediction for a pair of transmission and reception beams may also be performed, and the process refers to embodiment 1 described above, and will not be repeated here.

In some embodiments, in the process of the prediction for a pair of transmission and reception beams, when involving scanning/measurement/prediction of a reception beam, a repetition parameter (repetition) of the sent reference signal resource set may be set as on, indicating that the reference signal resources in this reference signal resource set use the same transmission beam. Otherwise, it is set as off. In some examples, it may also be necessary to consider receiving the reference signal or other data by using the optimal reception beam. Before slot T1, or after T4, the first communication node may send a reference signal resource set, where the repetition parameter (repetition) may be set as on, for scanning the optimal reception beam. Correspondingly, the second communication node receives and measures the reference signal resources in the reference signal resource set to obtain a group of beam metric parameters, thereby finding a largest beam metric parameter to determine its own optimal reception beam, and uses this reception beam for measurement and reception in subsequent measurement or transmission. In this case, the reference signal resource used for measuring the reception beam may also be configured in the same higher layer signaling as the aforementioned L reference signal resources, or may be configured in slot T0.

Embodiment 2: spatial transmission beam prediction is performed, and spatial beam prediction is performed on the first communication node side.

Exemplarily, taking an example where the second communication node may be a terminal and the first communication node may be a base station, in a case of spatial transmission beam prediction, the spatial beam prediction is performed at the first communication node side. In the entire beam prediction process, the entire beam space includes MA transmission beams, denoted as SetA. However, the prediction result obtained actually from spatial beam prediction is MB transmission beams, denoted as SetB. MB is less than MA, and both MB and MA are positive integers. The first communication node may configure L CSI reports and C reference signal resource sets corresponding to the L CSI reports at slot T0, where slot T0 is before the aforementioned first slot. For example, in a CSI report configuration, parameter information of the L CSI reports is configured. An i-th CSI report among the L CSI reports corresponds to an i-th reference signal resource set, where i = 1, ..., L. Exemplarily, the reference signal resources in the reference signal resource set may be CSI-RS or SSB, etc. L may be an integer greater than or equal to 2. For example, the value of L may be 2, 3, etc.

Then, the first communication node sends reference signal resources corresponding to a first reference signal resource set at slot T1, and the second communication node may receive and measure the reference signal resources corresponding to the first reference signal resource set at or before slot T2, to obtain MB pieces of beam parameter information corresponding to the transmission beams in SetB. The aforementioned first slot may be slot T1, slot T2, or any time instant between slot T1 and slot T2.

The second communication node may transmit a first CSI report in slot T2. Correspondingly, the first communication node may receive the first CSI report. The first CSI report includes all or a part of the beam parameter information and/or the CRIs corresponding to the MB pieces of beam parameter information aforementioned. Based on the acquired all or part of the beam parameter information and/or the CRIs corresponding to the MB transmission beams, the first communication node may input them into a spatial beam prediction model for prediction, to obtain MA pieces of beam parameter information, and based on the MA pieces of beam parameter information, obtain beam parameter information and/or CRIs corresponding to the preferred K transmission beams. Alternatively, the first communication node may predict, based on the spatial beam model, the beam parameter information of the K preferred transmission beams or CRIs corresponding to the K preferred transmission beams.

In an implementation, the second communication node may also send a second CSI report.

Exemplarily, in slot T3 in which the pre-configured second reference signal resource set is located, the first communication node may transmit at least K reference signal resources by using K parameters in the first CSI report, e.g., the transmission beams corresponding to the CRIs, where each reference signal resource corresponds to a transmission beam.

Thus, the second communication node may receive K reference signal resources, perform measurement to obtain K pieces of beam parameter information, determine beam parameter information corresponding to an optimal transmission beam and a CRI corresponding to the optimal transmission beam based on the K pieces of beam parameter information, and transmit the second CSI report in slot T4. The second CSI report includes the determined beam parameter information and/or CRI corresponding to the optimal transmission beam. Correspondingly, the first communication node receives the second CSI report, decodes the second CSI report, to obtain the beam parameter information and/or CRI corresponding to the optimal transmission beam. Furthermore, scheduling and resource transmission may be performed based on the determined beam parameter information and/or CRI corresponding to the optimal transmission beam.

In another implementation, the second communication node no longer sends the second CSI report.

Exemplarily, the first communication node cannot send the aforementioned reference signal resources in the second reference signal resource set in slot T3, due to reasons such as resource conflict or scheduling too late, and thus the second communication node no longer sends the second CSI report. The first communication node may send signaling to the second communication node to indicate the terminal not to send the second CSI report, so that the second communication node, after receiving the signaling, does not perform the measurement and feedback corresponding to the second CSI report.

In another example, in a case where the value of K is 1, for example, there is only one value of the K preferred CRIs fed back by the second communication node, the second communication node no longer sends the second CSI report. Alternatively, in a case where the value of K is greater than or equal to 2, the first communication node may transmit the second reference signal resource set in slot T3, and then the second communication node may send the second CSI report.

In the embodiments of the present disclosure, T0, T1, T2, T3, and T4 are all integers, and $T1 \geq T0$, $T2 \geq T1$, $T3 \geq T2$, $T4 \geq T3$.

In some embodiments, the number of reference signal resources in the second reference signal resource set configured by the first communication node may be greater than K.

Exemplarily, in the case where the number of reference signal resources in the second reference signal resource set configured by the first communication node is greater than K, the first communication node may determine K reference signal resources from the second reference signal resource set, to send them to the second reference signal. For example, the first communication node may determine K reference signal resources with the smallest resource index, K reference signal resources with the largest reference signal resource index, or K reference signal resources starting from a reference signal resource index, or K reference signal resources agreed upon by the first communication node and the second communication node, or equally spaced K reference signal resources, etc.

In some embodiments, prediction for a pair of transmission and reception beams may also be performed, and the process refers to embodiment 2 described above, and will not be repeated here.

In some embodiments, in the process of the prediction for a pair of transmission and reception beams, when involving scanning/measurement/prediction of a reception beam, a repetition parameter (repetition) of the sent reference signal resource set may be set as on, indicating that the reference signal resources in this reference signal resource set use the same transmission beam; otherwise, it is set as off. In some examples, it may also be necessary to consider receiving the reference signal or other data by using the optimal reception beam. Before slot T1, or after T4, the first communication node may send a reference signal resource set, where the repetition parameter (repetition) may be set as on, for scanning the optimal reception beam. Correspondingly, the second communication node receives and measures the reference signal resources in the reference signal resource set to obtain a group of beam metric parameters, thereby finding a largest beam metric parameter to determine its own optimal reception beam, and uses this reception beam for measurement and reception in subsequent measurement or transmission. In this case, the reference signal resource used for measuring the reception beam may also be configured in the same higher layer signaling as the aforementioned L reference signal resources, or may be configured in slot T0.

Embodiment 3: temporal transmission beam prediction is performed, and temporal beam prediction is performed at the second communication node side.

Exemplarily, taking an example where the second communication node may be a terminal and the first communication node may be a base station, in a case of temporal transmission beam prediction, the temporal beam prediction is performed at the second communication node side. In the entire beam prediction process, the entire beam space includes MA transmission beams, denoted as SetA. However, the prediction result obtained actually from temporal beam prediction is MB transmission beams, denoted as SetB. MB is less than MA, and both MB and MA are positive integers.

A temporal beam prediction model may predict beam parameter information groups of future M slots (a prediction window or referred to as a second time window) based on beam parameter information groups of N historical slots (a measurement window or a first time window). N is a positive integer greater than 1, and M is an integer greater than or equal to 1.

The first communication node may configure L CSI reports and reference signal resource sets corresponding to the L CSI reports at slot T0, where slot T0 is before the aforementioned first slot. For example, in a CSI report configuration, parameter information of the L CSI reports is configured. The first communication node configures N+M reference signal resource sets, the first CSI report is associated with N reference signal resource sets, and the i-th CSI report is associated with the (N+i-1)-th reference signal resource set, i=2, ..., L. Here, the reference signal resource may be CSI-RS, SSB, etc. L is an integer greater than or equal to 2, and L=M+1 is taken as an example. Furthermore, after configuring the N+M reference signal resource sets, the first communication node sends the reference signal resources in the first reference signal resource set to N-th reference signal resource set respectively in N slots before slot T1.

Then, the second communication node receives and measures the reference signals in the N reference signal resource sets respectively in the N slots before slot T2. MB pieces of Beam parameter information on each slot of the N slots corresponding to the transmission beams in SetB are obtained. M beam parameter information groups (each beam parameter information group includes MA pieces of beam parameter information) are predicted by inputting the beam parameter information and/or CRIs corresponding to the MB transmission beams on each slot of the N slots into the model, and according to each beam parameter information group of the M beam parameter information groups, beam parameter information and/or CRIs corresponding to preferred K transmission beams in the beam parameter information group are acquired, to obtain M preferred beam parameter information groups and/or CRI groups.

Alternatively, the second communication node may directly predict, based on the temporal beam model, beam parameter information groups of M preferred transmission beams or CRI groups corresponding to M preferred transmission beams. Each preferred beam parameter information group includes K pieces of preferred beam parameter information, and each preferred CRI group includes K preferred CRIs. The first CSI report is formed from the M preferred beam parameter information groups and/or CRI groups, and the second communication node may transmit the first CSI report on slot T2.

In an implementation, the first communication node obtains the aforementioned M preferred beam parameter information groups and/or CRI groups, and performs M rounds of second-stage beam scanning, to determine an optimal transmission beam on each slot of the M prediction slots. For a j-th second-stage scanning, in a pre-configured slot T3_j in which an (N+j)-th reference signal resource set is located, at least K reference signal resources are transmitted by using preferred transmission beams in a j-th preferred beam parameter information group and/or CRI group, where each reference signal resource corresponds to a transmission beam.

Thus, the second communication node may receive the K reference signal resources and measure to obtain K pieces of beam parameter information, determine beam parameter information corresponding to an optimal transmission beam and CRI corresponding to the optimal transmission beam, based on these K pieces of beam parameter information, and transmit a (j+1)-th CSI report in a slot T4_j. The (j+1)-th CSI report includes the optimal beam parameter information and/or CRI. The base station receives the (j+1)-th CSI report, thereby obtaining the optimal beam parameter information and/or CRI. Then, in a j-th period of the prediction window, scheduling and resource transmission may be performed based on the determined beam parameter information and/or CRI corresponding to the optimal transmission beam.

In another implementation, the first communication node cannot send the reference signal resources in the second reference signal resource set in the slot T3_j, and thus the second communication node no longer sends other CSI reports. The first communication node may send signaling to the second communication node to indicate that the terminal no longer sends other CSI reports, so that the second communication node no longer performs measurement and feedback corresponding to other CSI reports, after receiving the signaling.

In another example, in a case where the value of K is 1, for example, the K preferred CRIs fed back by the second communication node have only one value, the second communication node no longer performs measurement and feedback corresponding to the (1+j)-th CSI report to send a CSI report. Alternatively, in a case where the value of K is greater than or equal to 2, the first communication node may transmit the second reference signal resource set at slot T3_j, and then the second communication node may send a new CSI report.

In some embodiments, the number of reference signal resources in the second reference signal resource set configured by the first communication node may be greater than K.

Exemplarily, in the case where the number of reference signal resources in the second reference signal resource set configured by the first communication node is greater than K, the first communication node may determine K reference signal resources from the second reference signal resource set, to send them to the second communication node. For example, the first communication node may determine K reference signal resources with the smallest resource index, K reference signal resources with the largest reference signal resource index, or K reference signal resources starting from a reference signal resource index, or K reference signal resources agreed upon by the first communication node and the second communication node, or equally spaced K reference signal resources, etc.

In some embodiments, the second communication node may feed back a CSI report formed from M times of second-stage beam scanning. That is, the second communication node may form a CSI report from preferred beam parameter information and/or CRIs corresponding to the reference signal resources of the reference signal resource set sent in the slot T3_j, j=1, ..., M, to feed back.

In the embodiments of the present disclosure, T0, T1, T2, T3_j, T4_j are integers, and T1≥T0, T2≥T1, T3_j≥T2, T4_j≥T3_j, T3_k<T3_j, T4_k<T4_j, k<j, j, k=1, ..., M. Furthermore, the number MB of reference signal resources on each slot of the N slots aforementioned may be different, and the number K of pieces of beam parameter information fed back at each time instant may also be different, for example, for a j-th slot, there are Kj pieces of beam parameter information and/or CRIs, and the number of corresponding reference signal resources is also Kj, j=1, ..., M.

In some embodiments, prediction of a reception beam may also be performed, and the process refers to the above embodiment 3, and will not be repeated here.

In some embodiments, the transmission beam in the above embodiments is replaced with the reception beam, so that prediction of the reception beam may be performed according to the similar method. When involving scanning/measurement/prediction of the reception beam, a repetition parameter (repetition) of the sent reference signal resource set may be set as on, indicating that the reference signal resources in this reference signal resource set use the same transmission beam; otherwise, it is set as off. In some embodiments, it may also be necessary to consider receiving the reference signal or other data by using the optimal reception beam. The first communication node may send a reference signal resource set before the T1 slot, or after or before each second-stage scanning, for example, after or before T4_j, j=1, ..., M, and the repetition parameter (repetition) should be set as on for scanning the optimal reception beam. The second communication node receives and measures reference signal resources in the reference signal resource set to obtain a group of beam metric parameters, thereby finding a maximum beam metric parameter to determine an optimal reception beam of this prediction slot, and uses this reception beam for measurement and reception in subsequent measurement or transmission of this prediction slot. The reference signal resource for measuring the reception beam may also be configured in the same higher layer signaling as the aforementioned M+N reference signal resources, or configured at the T0 time instant.

Embodiment 4: temporal transmission beam prediction is performed, and temporal beam prediction is performed at the first communication node side.

Exemplarily, taking an example where the second communication node may be a terminal and the first communication node may be a base station, in a case of temporal transmission beam prediction, the temporal beam prediction is performed at the first communication node side. In the entire beam prediction process, the entire beam space includes MA transmission beams, denoted as SetA. However, the prediction result obtained actually from temporal beam prediction is MB transmission beams, denoted as SetB. MB is less than MA, and both MB and MA are positive integers.

A temporal beam prediction model may predict beam parameter information groups of future M slots (a prediction window or referred to as a second time window) based on beam parameter information groups of N historical slots (a measurement window or a first time window). N is a positive integer greater than 1, and M is an integer greater than or equal to 1.

The first communication node may configure L CSI reports and reference signal resource sets corresponding to the L CSI reports at slot T0, where slot T0 is before the aforementioned first slot. For example, in a CSI report configuration, parameter information of the L CSI reports is configured. The first communication node configures N+M reference signal resource sets, the first CSI report is associated with N reference signal resource sets, and the i-th CSI report is associated with the (N+i-1)-th reference signal resource set, i=2, ..., L. Here, the reference signal resource may be CSI-RS, SSB, etc. L is an integer greater than or equal to 2, and L=M+1 is taken as an example. Furthermore, after configuring the N+M reference signal resource sets, the first communication node sends the reference signal resources in the first reference signal resource set to N-th reference signal resource set respectively in N slots before slot T1.

Then, the second communication node receives and measures the reference signals in the N reference signal resource sets respectively in the N slots before slot T2, to obtain MB pieces of beam parameter information on the N slots corresponding to the transmission beams in SetB. A first CSI report is formed based on all or a part of the MB pieces of beam parameter information and/or the corresponding CRIs on each slot of the N slots (for example, by selecting beam parameter information and/or CRI with the beam parameter information being greater than a preset threshold, or selecting multiple pieces of beam parameter information and/or CRIs with the largest ranking), and the first CSI report is fed back at slot T2. Correspondingly, the first communication node may receive the first CSI report. That is, the first communication node may acquire the all or part of the MB pieces of beam parameter information and/or the corresponding CRIs on each slot of the N slots.

The first communication node may input the acquired the all or part of the MB pieces of beam parameter information and/or the corresponding CRIs on each slot of the N slots into the model to predict M beam parameter information groups (each beam parameter information group includes MA pieces of beam parameter information), and according to each beam parameter information group of the M beam parameter information groups, acquire beam parameter information and/or CRIs corresponding to preferred K transmission beams in the beam parameter information group, to obtain M preferred beam parameter information groups and/or CRI groups.

Alternatively, the first communication node may also directly predict the preferred beam parameter information groups and/or the CRI groups through the model. Each preferred beam parameter information group includes K pieces of preferred beam parameter information, and each preferred CRI group includes K preferred CRIs. The first communication node performs M times of second-stage beam scanning, to determine an optimal transmission beam on each slot of the M prediction slots. For the j-th second-stage scanning, at a pre-configured slot T3_j in which the (N+j)-th reference signal resource set is located, K reference signal resources are transmitted by using beams corresponding to K CRIs in the j-th preferred beam parameter information group and/or CRI group, where each reference signal resource corresponds to a transmission beam.

Correspondingly, the second communication node receives the K reference signal resources and performs measurement, to obtain K pieces of beam parameter information. Then, the second communication node may determine the optimal beam parameter information and the CRI corresponding to the optimal beam parameter information according to these K pieces of beam parameter information, and transmit the (j+1)-th CSI report at slot T4_j, to feed back the optimal beam parameter information and/or the CRI corresponding to the optimal beam parameter information. The first communication node receives the (j+1)-th CSI report, thereby obtaining the optimal beam parameter information and/or the CRI corresponding to the optimal beam parameter information. Then, in the j-th slot of the M prediction slots, scheduling and resource transmission are performed according to the determined optimal beam parameter information and/or CRI corresponding to the optimal beam parameter information.

In an example, the first communication node cannot send the reference signal resources in the second reference signal resource set in the slot T3_j, and thus, the second communication node no longer sends other CSI reports. The first communication node may send signaling to the second communication node to indicate that the terminal no longer sends other CSI reports, so that the second communication node no longer performs measurement and feedback corresponding to other CSI reports, after receiving the signaling.

In another example, in a case where the value of K is 1, for example, the K preferred CRIs fed back by the second communication node have only one value, the second communication node no longer performs measurement and feedback corresponding to the (1+j)-th CSI report to send a CSI report. Alternatively, in a case where the value of K is greater than or equal to 2, the first communication node may transmit the second reference signal resource set at slot T3_j, and then the second communication node may send a new CSI report.

In some embodiments, the number of reference signal resources in the second reference signal resource set configured by the first communication node may be greater than K.

Exemplarily, in the case where the number of reference signal resources in the second reference signal resource set configured by the first communication node is greater than K, the first communication node may determine K reference signal resources from the second reference signal resource set, to send them to the second reference signal. For example, the first communication node may determine K reference signal resources with the smallest resource index, K reference signal resources with the largest reference signal resource index, or K reference signal resources starting from a reference signal resource index, or K reference signal resources agreed upon by the first communication node and the second communication node, or equally spaced K reference signal resources, etc.

In some embodiments, the second communication node may form a CSI report from M times of second-stage beam scanning, to feed back. That is, the second communication node may form a CSI report from preferred beam parameter information and/or CRIs corresponding to the reference signal resources of the reference signal resource set sent in the slot T3_j, j=1, ..., M, to feed back.

In the embodiments of the present disclosure, T0, T1, T2, T3_j, T4_j are integers, and T1≥T0, T2≥T1, T3_j≥T2, T4_j≥T3_j, T3_k<T3_j, T4_k<T4_j, k<j, j, k=1, ..., M. Furthermore, the number MB of reference signal resources on each slot of the N slots aforementioned may be different, and the number K of pieces of beam parameter information fed back at each time instant may also be different, for example, for a j-th slot, there are Kj pieces of beam parameter information and/or CRIs, and the number of corresponding reference signal resources is also Kj, j=1, ..., M.

In some embodiments, prediction of a reception beam may also be performed, and the process refers to the above embodiment 4, and will not be repeated here.

In some embodiments, the transmission beam in the above embodiments is replaced with the reception beam, so that prediction of the reception beam may be performed according to the similar method. When involving scanning/measurement/prediction of the reception beam, a repetition parameter (repetition) of the sent reference signal resource set may be set as on, indicating that the reference signal resources in this reference signal resource set use the same transmission beam; otherwise, it is set as off. In some embodiments, it may also be necessary to consider receiving the reference signal or other data by using the optimal reception beam. The first communication node may send a reference signal resource set before the T1 slot, or after or before each second-stage scanning, for example, after or before T4_j, j=1, ..., M, and the repetition parameter (repetition) should be set as on for scanning the optimal reception beam. The second communication node receives and measures reference signal resources in the reference signal resource set to obtain a group of beam metric parameters, thereby finding a maximum beam metric parameter to determine an optimal reception beam of this prediction slot, and uses this reception beam for measurement and reception in subsequent measurement or transmission of this prediction slot. The reference signal resource for measuring the reception beam may also be configured in the same higher layer signaling as the aforementioned M+N reference signal resources, or configured at the T0 time instant.

In some embodiments, in the present disclosure, among two CSI reports adjacent in time domain, a content of a second CSI report may be determined based on a content of a first CSI report. Here, the first CSI report is a CSI report with a smaller transmission slot among the two adjacent CSI reports, and the second CSI report is a CSI report with a larger transmission slot among the two adjacent CSI reports.

Exemplarily, the aforementioned determining the content of the second CSI report based on the content of the first CSI report may include at least one of: determining a reference signal resource corresponding to the second CSI report based on the content of the first CSI report; or, determining the number of CSI parameters in the second CSI report based on the content of the first CSI report; or, determining whether the content of the second CSI report is a null value based on the content of the first CSI report.

In some embodiments, among three CSI reports adjacent in time domain, a content of a second CSI report is determined according to a content of a first CSI report, and/or a content of a third CSI report is determined according to the content of the second CSI report. Here, the first CSI report is a CSI report with a minimum transmission slot among the three adjacent CSI reports, the second CSI report is a CSI report with a middle transmission slot among the three adjacent CSI reports, and the third CSI report is a CSI report with a maximum transmission slot among the three adjacent CSI reports.

The process for determining the content of the CSI report may refer to the above description of determining the content of the second CSI report based on the content of the first CSI report, which will not be repeated here.

In some embodiments, among two CSI reports adjacent in time domain among the L CSI reports, a time interval between an i-th CSI report and an (i+1)-th CSI report is greater than or equal to a sum of a first time interval and a second time interval. The first time interval is a difference between time of a first symbol of an uplink physical channel for sending the i-th CSI report and time of a first symbol for receiving a first channel state information reference signal resource; the second time interval is an interval between the time of the first symbol for receiving the first channel state information reference signal resource and time of a last symbol of an uplink physical channel for sending the (i+1)-th CSI report. Here, i=1, ..., L-1. The first time interval and the second time interval here are described relative to the i-th CSI report and the (i+1)-th CSI report; for different values of i, there may be different first time interval and second time interval.

In some embodiments, between two CSI reports adjacent in time domain among the L CSI reports, a time interval between a first CSI report and a second CSI report is greater than or equal to a sum of a first time interval and a second time interval.

The first time interval is a difference between time of a first symbol of an uplink physical channel for sending the first CSI report and time of a first symbol for receiving a first channel state information reference signal resource; the second time interval is an interval between the time of the first symbol for receiving the first channel state information reference signal resource and time of a last symbol of an uplink physical channel for sending the second CSI report.

Furthermore, the aforementioned first CSI report and second CSI report are relative; in temporal beam prediction, there may be multiple groups of such first CSI report and second CSI report, or second CSI report and third CSI report, etc.

Exemplarily, the first time interval may be the time from a last symbol of a PUCCH or a PUSCH to the time when the first communication node decodes the PUCCH or the PUSCH. The second time interval may be the time for the first communication node sending a CSI-RS and the terminal measuring the CSI-RS. Furthermore, in a case where the uplink carrier spacing and the downlink carrier spacing are different, it may be necessary to convert the time based on the uplink carrier spacing and the downlink carrier spacing.

Exemplarily, the time interval between two CSI reports is greater than 2 times of a first delay Z', or greater than 2 times of a second delay Z.

In some embodiments, among three CSI reports adjacent in time domain within the L CSI reports, a time interval between a second CSI report and a third CSI report is greater than or equal to a sum of a third time interval and a fourth time interval. The third time interval is a difference between time of a first symbol of an uplink physical channel for sending the second CSI report and time of a first symbol for receiving a second channel state information reference signal resource; the fourth time interval is a difference between the time of the first symbol for receiving the second channel state information reference signal resource and time of a last symbol of an uplink physical channel for sending the third CSI report.

The second CSI report and the third CSI report are relative. In temporal beam prediction, there may be multiple groups of such first CSI report and second CSI report, or second CSI report and third CSI report, etc.

In some embodiments, the first communication node may further send first signaling. The first signaling is used to indicate/update/modify a parameter of at least one CSI report among the L CSI reports. The first signaling is an MAC CE or DCI.

Thus, upon receiving the first signaling, the second communication node may configure, modify, or update the parameter of at least one CSI report among the L CSI reports, based on the first signaling.

In some embodiments, the parameter of the CSI report includes at least one of the following parameters: a configuration index of a reference signal resource corresponding to channel measurement (resources For Channel Measurement), a configuration index of a reference signal resource corresponding to interference (CSI-IM-Resources For Interference), a carrier parameter, a report configuration type (report Config Type), a report quality parameter, a report frequency domain configuration parameter, a configuration parameter of a channel quality indicator, a codebook configuration (codebook Config) parameter, a non-PMI port indication (non-PMI-Port Indication), a beam prediction indication, a function indication. In some embodiments, it may also include parameters used to define the following: a periodic report, a semi-persistent report on PUCCH (semi Persistent On PUCCH), a semi-persistent report on PUSCH (semi Persistent On PUSCH), an aperiodic report, a report quality (report Quantity), a parameter set used to define reported CSI (such as cri-RI-PMI-CQI, cri-RI-i1, cri-RI-i1-CQI, etc.), a report frequency domain configuration (report Freq Configuration) (such as including a CQI format indicator (cqi-Format Indicator), a PMI format indicator (pmi-Format Indicator), a CSI reporting band (csi-Reporting Band), a CQI table (cqi-Table)), etc.

In some embodiments, the first communication node may further send second signaling. The second signaling is used to indicate/update/modify a parameter of at least one reference signal resource set among the C reference signal resource sets.

In some embodiments, the parameter of the at least one reference signal resource set among the C reference signal resource sets include at least one of: a reference signal resource list (nzp-CSI-RS-Resources-List), a repetition parameter (repetition), an aperiodic triggering offset (aperiodicTriggeringOffset), a tracking reference signal information enabling (TRS-Info), a second aperiodic triggering offset (aperiodicTriggeringOffset-r16).

In some embodiments, the first communication node may further send third signaling. The third signaling is used to indicate/update/modify a parameter of at least one reference channel resource among the C reference signal resource sets.

In some embodiments, the parameter of the at least one reference signal resource in C reference signal resource sets include at least one of: periodicity and offset, power control offset relative to data, power control offset relative to a synchronization signal (SS) (power Control OffsetSS), QCL information of a periodic CSI-RS (qcl-InfoPeriodicCSI-RS), resource mapping, and scrambling identifier (scrambling ID).

In some embodiments, according to changes in the channel scenario or application requirements, the value of the parameter in at least one CSI report among the above parameters may be changed via signaling (e.g., the aforementioned MAC CE or DCI); and the value of the parameter in the CSI report changed via signaling is still used in a subsequent CSI report, to generate the CSI report, until new signaling changes the parameter in the CSI report.

It should be noted that, in the process of spatial prediction for a transmission beam, spatial prediction for a pair of transmission and reception beams, temporal prediction for a transmission beam, or temporal prediction for a pair of transmission and reception beams, the report parameter may be dynamically modified in multiple CSI reports in different slots. In this way, the problem of large delay caused by re-configuring CSI via higher layer signaling may be avoided, and CSI suitable for the current scenario may also be flexibly reported as needed. In this way, the flexibility of channel state information reporting may be improved, without re-configuring CSI via higher layer signaling, and signaling delay may be reduced.

In an example, a reference signal resource configuration index corresponding to channel measurement is taken as an example. The first communication node may configure a periodic or semi-persistent CSI report configuration via higher layer signaling, where the periodic or semi-persistent CSI report configuration includes at least a reference signal resource configuration index corresponding to channel measurement. In CSI reports on some slots, its value is configured; the second communication node may perform filtering, such as averaging, on channels measured on multiple slots. As the environment or requirement changes, the first communication node may send a piece of signaling (e.g., an MAC CE or DCI) to indicate that the parameter is modified as not Configured, so that after receiving the signaling, the second communication node does not perform filtering on channels on multiple slots during measurement for the subsequent CSI report. In other examples, the first communication node and the second communication node may flexibly modify a time domain restriction of interference measurement (time Restriction For Interference Measurements) in a similar manner.

In another example, a carrier parameter is taken as an example. The first communication node may configure a periodic or semi-persistent CSI report configuration via higher layer signaling, where the periodic or semi-persistent CSI report configuration includes at least a carrier parameter. In CSI reports on some slots, its value is 0; the second communication node may obtain CSI corresponding to carrier 0 to feed back. As the environment or requirement changes, the carrier is switched, for example, a cell changes, low frequency is changed to high frequency, or a bandwidth changes, etc., and the first communication node may send a piece of signaling (e.g., an MAC CE or DCI) to indicate that the parameter is modified to 1; thus, after the second communication node receives the instruction, during measurement for the subsequent CSI report, the terminal measures CSI corresponding to carrier 1 to feed back. Of course, in some examples, it may be similarly modified to other values via signaling, which will not be repeated here.

In yet another example, a report configuration type is taken as an example. The first communication node may configure a periodic or semi-persistent CSI report configuration via higher layer signaling, where the periodic or semi-persistent CSI report configuration includes at least a report configuration type, which is used to indicate a time domain characteristic of the CSI report, such as whether it is periodic or semi-persistent. In CSI reports on some slots, its value is semi Persistent On PUCCH; the second communication node may measure and obtain CSI to feed back on a PUCCH. As the environment or requirement changes, the first communication node may send a piece of signaling (e.g., an MAC CE or DCI) to indicate that the parameter is modified to semi Persistent On PUSCH, so that after the second communication node receives the signaling, during measurement of the subsequent CSI report, the CSI measured by the terminal is fed back on a specified PUSCH. In other examples, it may be similarly modified to other values via signaling, which will not be repeated here.

In yet another example, a report quality parameter is taken as an example. The first communication node may configure a periodic or semi-persistent CSI report configuration via higher layer signaling, where the periodic or semi-persistent CSI report configuration includes at least a report quality parameter, indicating the content included in the CSI report, for example, whether the CSI feedback is a combination of one or more of CRI, RI, PMI, and CQI. In CSI reports on some slots, its value is cri-RI-PMI-CQI; the terminal measures and obtains CSI, and the CSI includes CRI, RI, PMI, and CQI. As the environment or requirement changes, for example, because an increase in speed, the feedback closed-loop PMI has been inaccurate, it may be changed to an open-loop mode; that is, the first communication node may send a piece of signaling (e.g., an MAC CE or DCI) to indicate that the parameter is modified to cri-RI-i1; then, after the second communication node receives the signaling, during measurement for the subsequent CSI report, the second communication node measures codebook index i1 including CRI, RI, and wideband. Of course, in some examples, it may be similarly modified to other values via signaling, which will not be detailed here. In other examples, it may be similarly modified to other values via signaling, which will not be repeated here.

In yet another example, a report frequency domain configuration parameter is taken as an example. The first communication node may configure a periodic or semi-persistent CSI report configuration via higher layer signaling, where the periodic or semi-persistent CSI report configuration includes at least a report frequency domain configuration parameter, which is used to indicate whether the content of the CSI report is wideband or subband. In CSI reports on some slots, a sub-parameter CQI format indicator (cqi-Format Indicator) of the report frequency domain configuration has a value of wide band CQI; the second communication node measures and obtains CSI, the CSI includes at least CQI, and this CQI is wideband. As the environment or requirement changes, for example, it needs to track fine CQI of each subband, the first communication node may send a piece of signaling (e.g., an MAC CE or DCI) to indicate that the sub-parameter CQI format indicator (cqi-Format Indicator) of the report frequency domain configuration has a value of sub band CQI; then, after the second communication node receives the signaling, during measurement for the subsequent CSI report, the second communication node measures subband CQI. In yet another example, in CSI reports on some slots, a sub-parameter PMI format indicator (pmi-Format Indicator) of the report frequency domain configuration has a value of wide band PMI; the second communication node measures and obtains CSI, the CSI includes at least PMI, and this PMI is wideband, including at least one of i1, i11, and i12. As the environment or requirement changes, for example, it needs to track fine PMI of each subband, the first communication node may send a piece of signaling (e.g., an MAC CE or DCI) to indicate that the sub-parameter PMI format indicator (pmi-Format Indicator) of the report frequency domain configuration has a value of sub band PMI; then, after the second communication node receives the signaling, during measurement for the subsequent CSI report, the second communication node measures the subband PMI.

Alternatively, in CSI reports on some slots, a sub-parameter CSI reporting band (csi-Reporting Band) of the report frequency domain configuration parameter has a value of BIT [1,1,1,0,0,0,0,0]; the second communication node performs CSI measurement on a bandwidth of eight subbands, and only measures subbands with the above bit mapping of a value 1, for example, subband 1, subband 2, and subband 3. As the environment or requirement changes, the first communication node may send a piece of signaling (e.g., an MAC CE or DCI) to indicate that the sub-parameter CSI reporting band (csi-Reporting Band) of the report frequency domain configuration has a value of BIT [1,1,1,1,1,1,0,0]; then, after receiving the signaling, during measurement for the subsequent CSI report, the second communication node only measures subbands with the above bit mapping of a value 1, for example, subband 1, subband 2, ..., subband 6. In other examples, it may be similarly modified to other values via signaling, which will not be repeated here.

In yet another example, a CQI table is taken as an example. The first communication node may configure a periodic or semi-persistent CSI report configuration via higher layer signaling, where the periodic or semi-persistent CSI report configuration includes at least a CQI table, which is used to indicate a table for calculating the CQI. In CSI reports on some slots, its value is table1, and the second communication node measures and obtains CSI based on table1. As the environment or the requirement changes, the first communication node may send a piece of signaling (e.g., an MAC CE or DCI) to indicate that the parameter is modified to table1, and then after the second communication node receives the signaling, during measurement for the subsequent CSI report, the second communication node measures and obtains CSI based on table2. In other examples, it may be similarly modified to other values via signaling, which will not be repeated here.

In yet another example, a codebook configuration parameter is taken as an example. The first communication node may configure a periodic or semi-persistent CSI report configuration via higher layer signaling, where the periodic or semi-persistent CSI report configuration includes at least a codebook configuration parameter, which is used to indicate a configuration of a codebook when calculating CSI, for example, a type of the codebook (whether it is a typeI codebook or a typeII codebook), for example, a rank limitation of the codebook, for example, a mode of the codebook. In CSI reports on some slots, the configured codebook mode is a type1 codebook, and the second communication node measures and obtains CSI based on the type1. As the environment or the requirement changes, the first communication node may send a piece of signaling (e.g., an MAC CE or DCI) to indicate that the parameter is modified to type2, and then after the second communication node receives the signaling, during measurement for the subsequent CSI report, the second communication node measures and obtains CSI based on the type2. Of course, in some examples, it may be similarly modified to other values via signaling, which will not be detailed here. In other examples, similarly, the value of the non-PMI port indication (non-PMI-Port Indication) may also be modified via signaling, the value of the parameter, group Based Beam Reporting, may be also modified via signaling, and the value of the parameter, sub band Size, may also be modified via signaling.

In yet another example, a model indicator parameter is taken as an example. The first communication node may configure a periodic or semi-persistent CSI report configuration via higher layer signaling, where the periodic or semi-persistent CSI report configuration includes at least a model indicator parameter, which is used to indicate a model used when calculating CSI. In CSI reports on some slots, the configured model indicator is 1, and the second communication node obtains CSI based on a model corresponding to the model indicator of 1. As the environment or the requirement changes, the first communication node may send a piece of signaling (e.g., an MAC CE or DCI) to indicate that the parameter is modified to 2, and then after the second communication node receives the signaling, during measurement for the subsequent CSI report, the second communication node obtains CSI based on a model corresponding to the model indicator of 1. Of course, in some examples, it may be similarly modified to other values via signaling, which will not be detailed here. In other examples, similarly, the value of the non-PMI port indication function indication may be modified via signaling, which will not be repeated here.

In some embodiments, in a case where the above L CSI reports are aperiodic CSI reports, the first communication node may also send fourth signaling, where the fourth signaling is used to activate the L CSI reports, and the fourth signaling is physical layer signaling.

In some embodiments, the CSI report configuration corresponding to the L CSI reports includes at least L CSI report slot offsets, where the L CSI report slot offsets satisfy a first condition, that is, an offset between any two CSI reports is greater than or equal to a sum of first time and second time corresponding to the two CSI reports, or greater than or equal to 2 * the first delay Z', or greater than or equal to 2 * the first delay Z.

In some embodiments, C reference signal resource sets corresponding to the L CSI reports correspond to at least C reference signal resource slot offsets, where the C reference signal resource slot offsets satisfy a second condition, that is, a difference between any two reference signal resource offsets is greater than or equal to a configured value C0, or greater than a sum of first time and second time corresponding to the two CSI reports, or greater than or equal to 2 * the first delay Z', or greater than or equal to 2 * the first delay Z.

The present disclosure provides a transmission method for a channel state information report configuration, which may simultaneously configure L CSI reports, and the L CSI reports have a correlation. Furthermore, the configuration of a part of parameters of at least one CSI report among the L CSI reports may be modified via an MAC CE and/or physical layer signaling, which improves flexibility of channel state information reporting, without re-configuring the CSI report via higher layer signaling, and may reduce signaling delay.

As shown in FIG. 3, the present disclosure provides another transmission method for a channel state information report configuration, and the method includes the following S201: receive a CSI report configuration. The CSI report configuration includes parameter information of L CSI reports, and the L CSI reports correspond to C reference signal resource sets.

Both L and C are positive integers greater than 1.

In some embodiments, a CSI report configuration may include parameter information of the above L CSI reports. Alternatively, a CSI report configuration may also include C reference signal resource sets corresponding to the L CSI reports.

It should be noted that, in the process of spatial prediction for a transmission beam, spatial prediction for a pair of transmission and reception beams, temporal prediction for a transmission beam, or temporal prediction for a pair of transmission and reception beams, in order to improve prediction accuracy, at least K optimal beams may be predicted on each prediction slot. K is an integer greater than or equal to 1. In the process of transmitting, measuring these K predicted beams or beam pairs and finally determining an optimal transmission beam or beam pair, multiple CSI measurement and feedback processes are included. After the measurement and feedback of a CSI report is completed, the measurement and feedback of another CSI report may be configured via signaling, however, there is usually a large delay. Therefore, in the embodiments described above, the first communication node may include the aforementioned parameter information of the L CSI reports in a CSI report configuration. In this way, flexibility of channel state information reporting may be improved, without re-configuring CSI via higher layer signaling, thereby reducing signaling delay and/or signaling overhead.

In some embodiments, the above L CSI reports corresponding to the C reference signal resources includes but is not limited to the following scenarios, for example, a case where a reference signal resource set includes only one CSI resource. In some embodiments, the L CSI reports corresponding to C reference signal resource configurations, including but not limited to the following scenarios, for example, a case where a reference signal resource configuration includes only one CSI resource set.

In some embodiments, the above L CSI reports are periodic CSI reports or semi-persistent CSI reports. Alternatively, the above L CSI reports may also be aperiodic CSI reports. For an aperiodic CSI report, the first communication node may configure L CSI reports at a higher layer and perform one trigger or activation via one physical layer signaling.

In some embodiments, the CSI report configuration further includes configuration information of the C reference signal sets. In some instances, the configuration information of the C reference signal sets is configured by other higher layer signaling different from that of the CSI report configuration.

A reference signal resource set includes at least one reference signal resource. In some embodiments, the reference signal resource may include one or more CSI-RS resources and/or one or more SSB resources, etc.

In an implementation, each CSI report among the L CSI reports corresponds to a reference signal resource set.

In another implementation, a CSI report among the L CSI reports corresponds to N reference signal resource sets, M CSI reports among the L CSI reports each correspond to a reference signal resource set, N is an integer greater than 1, M is a positive integer, and L=M+1, C=N+M.

In yet another implementation, a CSI report among the L CSI reports corresponds to N reference signal resource sets, 2*M CSI reports among the L CSI reports each correspond to a reference signal resource set. N is an integer greater than 1, M is a positive integer, L = 2*M + 1, and C = N + 2*M.

In some embodiments, the second communication node may generate a CSI report based on the received CSI report configuration and send the generated CSI report to the first communication node.

In some embodiments, the parameter of the CSI report includes at least one of the following parameters: a configuration index of a reference signal resource corresponding to channel measurement, a configuration index of a reference signal resource corresponding to interference, a carrier parameter, a report configuration type, a report quality parameter, a report frequency domain configuration parameter, a configuration parameter of a channel quality indicator, a codebook configuration parameter, a non-PMI port indication, a beam prediction indication, a function indication. In some embodiments, it may also include parameters used to define the following: a periodic report, a semi-persistent report on PUCCH, a semi-persistent report on PUSCH, an aperiodic report, a report quality (e.g., including a CQI format indicator, a PMI format indicator), a CSI reporting band, a CQI table, etc.

In some embodiments, the second communication node may receive first signaling sent from the first communication node, and the first signaling is used to indicate a parameter of at least one CSI report among the L CSI reports. The first signaling is an MAC CE or DCI.

In some embodiments, the second communication node may also receive second signaling sent from the first communication node. The second signaling is used to indicate a parameter of at least one reference signal resource set among the C reference signal resource sets.

In some embodiments, the second communication node may also receive third signaling sent from the first communication node. The third signaling is used to indicate a parameter of at least one reference channel resource among the C reference signal resource sets.

In some embodiments, the second communication node may also receive fourth signaling sent from the first communication node, and the fourth signaling is used to activate the L CSI reports, and the fourth signaling is physical layer signaling. In this case, the above L CSI reports are aperiodic CSI reports.

In some embodiments, according to changes in the channel scenario or application requirements, the value of the parameter in at least one CSI report among the above parameters may be changed via signaling (e.g., the aforementioned MAC CE or DCI); and the value of the parameter in the CSI report changed via signaling is still used in a subsequent CSI report, to generate the CSI report, until new signaling changes the parameter in the CSI report.

It should be noted that, in the process of spatial prediction for a transmission beam, spatial prediction for a pair of transmission and reception beams, temporal prediction for a transmission beam, or temporal prediction for a pair of transmission and reception beams, the report parameter may be dynamically modified in multiple CSI reports in different slots. In this way, the problem of large delay caused by re-configuring CSI via higher layer signaling may be avoided, and CSI suitable for the current scenario may also be flexibly reported as needed. In this way, the flexibility of channel state information reporting may be improved, without re-configuring CSI via higher layer signaling, and signaling delay may be reduced.

For detailed descriptions of S201, reference may also be made to the relevant descriptions in the above S101 and S102, which will not be repeated here.

The above mainly introduces the solutions provided in the present disclosure from a perspective of interaction between various communication nodes. It may be understood that, to implement the above functions, each communication node includes corresponding hardware structures and/or software modules for performing each function. Those skilled in the art should easily realize that the present disclosure may be implemented in the form of hardware or a combination of hardware and computer software, in conjunction with algorithms and steps described in the embodiments disclosed in the present disclosure. Whether a certain function is performed by hardware or computer software driving hardware depends on the specific applications and design constraints of the technical solutions. Professional technicians may use different methods to implement the described functions, for each specific application, but such an implementation should not be considered beyond the scope of the present disclosure.

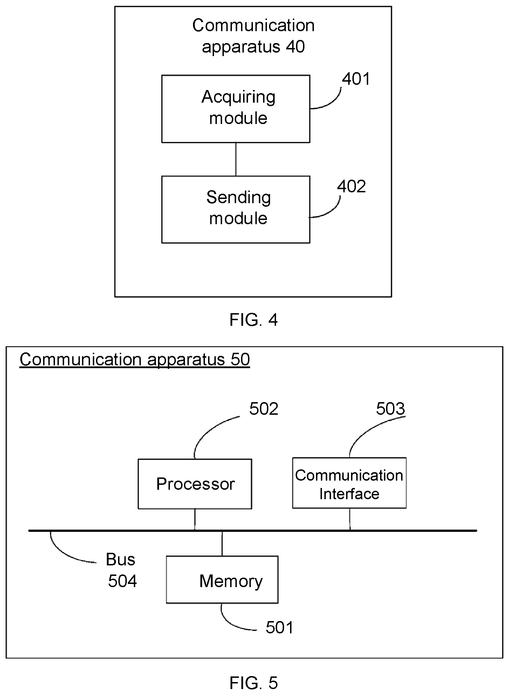

FIG. 4 shows a composition schematic diagram of a communication apparatus according to the embodiments of the present disclosure. As shown in FIG. 4, the communication apparatus 40 includes an acquiring module 401 and a sending module 402.

In some embodiments, the acquiring module 401 is configured to acquire a channel state information (CSI) report configuration, wherein the CSI report configuration comprises parameter information of L CSI reports, the L CSI reports correspond to C reference signal resource sets, and both L and C are positive integers greater than 1. The sending module 402 is configured to send the CSI report configuration.

In some embodiments, the CSI report configuration further comprises configuration information of the C reference signal resource sets.

In some embodiments, the L CSI reports and/or the C reference signal resource sets are configured before a first slot; or, CSI report configuration corresponding to the L CSI reports and/or configuration information of the C reference signal resource sets are sent before the first slot.

The first slot satisfies any one of: a minimum slot for sending the L CSI reports; a slot for sending a first CSI report among the L CSI reports; a minimum slot for sending a reference signal resource in the C reference signal resource sets; a slot for sending a first reference signal resource in the C reference signal resource sets.

In some embodiments, the L CSI reports are periodic CSI reports or semi-persistent CSI reports.

In some embodiments, each CSI report of the L CSI reports corresponds to a reference signal resource set.

In some embodiments, a CSI report among the L CSI reports corresponds to N reference signal resource sets, M CSI reports among the L CSI reports each correspond to a reference signal resource set, N is an integer greater than 1, M is a positive integer, and L = M + 1, C = N + M. Alternatively, a CSI report among the L CSI reports corresponds to N reference signal resource sets, 2*M CSI reports among the L CSI reports each correspond to a reference signal resource set, N is an integer greater than 1, M is a positive integer, and L = 2*M + 1, C = N + 2*M.

In some embodiments, the sending module 402 is further configured to send first signaling, where the first signaling is used to indicate a parameter of at least one CSI report among the L CSI reports.

In some embodiments, the first signaling is an MAC CE or DCI.

In some embodiments, the parameter of the CSI report comprises at least one of following parameters: a configuration index of resources For Channel Measurement, a configuration index of CSI-IM-Resources For Interference, a carrier parameter, a report Config Type, a report quantity parameter, a frequency domain configuration parameter of a report, a configuration parameter of a channel quality indicator, a codebook Config parameter, a non-PMI-Port Indication, a beam prediction indication, and a function indication.

In some embodiments, the sending module 402 is further configured to: send second signaling, where the second signaling is used to indicate a parameter of at least one reference signal resource set among the C reference signal resource sets.

In some embodiments, the parameter of the at least one reference signal resource set among the C reference signal resource sets comprises at least one of: nzp-CSI-RS-ResourcesList, repetition, aperiodicTriggeringOffset, TRS-Info, and aperiodicTriggeringOffset-r16.

In some embodiments, the sending module 402 is further configured to: send third signaling, where the third signaling is used to indicate a parameter of at least one reference channel resource of the C reference signal resource sets.

In some embodiments, the parameter of the at least one reference signal resource of the C reference signal resource sets comprises at least one of: periodicity And Offset, power Control Offset relative to data, power Control OffsetSS, qcl-InfoPeriodicCSI-RS, resource Mapping, and scrambling ID.

In some embodiments, a time interval between a first CSI report and a second CSI report among two CSI reports adjacent in time domain among the L CSI reports, is greater than or equal to a sum of a first time interval and a second time interval; the first time interval is a difference between time of a first symbol of an uplink physical channel for sending the first CSI report and time of a first symbol for receiving a first channel state information reference signal resource, and the second time interval is an interval between the time of the first symbol for receiving the first channel state information reference signal resource and time of a last symbol of an uplink physical channel for sending the second report.

In some embodiments, a time interval between a second CSI report and a third CSI report among three CSI reports adjacent in time domain among the L CSI reports, is greater than or equal to a sum of a third time interval and a fourth time interval; the third time interval is a difference between time of a first symbol of an uplink physical channel for sending the second CSI report and time of a first symbol for receiving a second channel state information reference signal resource, and the fourth time interval is a difference between the time of the first symbol for receiving the second channel state information reference signal resource and time of a last symbol of an uplink physical channel for sending the third report.

In some embodiments, a content of a second CSI report is determined according to a content of a first CSI report, among two CSI reports adjacent in time domain.

In some embodiments, determining the content of the second CSI report according to the content of the first CSI report, comprises at least one of: determining a reference signal resource corresponding to the second CSI report according to the content of the first CSI report; or determining a number of CSI parameters in the second CSI report according to the content of the first CSI report; or determining whether the content of the second CSI report is a null value according to the content of the first CSI report.

In some embodiments, a content of a second CSI report is determined according to a content of a first CSI report, and/or a content of a third CSI report is determined according to the content of the second CSI report, among three CSI reports adjacent in time domain.

In some embodiments, the L CSI reports are aperiodic CSI reports. The sending module 402 is further configured to send fourth signaling, where the fourth signaling is used to activate the L CSI reports, and the fourth signaling is physical layer signaling.

In some embodiments, the CSI report configuration further comprises L CSI report slot offsets, and the L CSI report slot offsets satisfy a first condition.

In some embodiments, the CSI report configuration further comprises C reference signal resource slot offsets, and the C reference signal resource slot offsets satisfy a second condition.

For the more detailed description of the above acquiring module 401 and sending module 403, more detailed description of each technical feature thereof, and description of beneficial effects, reference may be made to the corresponding method embodiment portions above, which will not be repeated here.

It should be noted that the modules in FIG. 4 may also be referred to as units, for example, the sending module may be referred to as a sending unit. In addition, in the embodiments shown in FIG. 4, the names of each module may also not be the names shown in the figures, for example, the sending module may also be referred to as a communication module, and the acquiring module may also be referred to as a communication module.

If each unit or module in FIG. 4 is implemented in the form of a software function module and sold or used as an independent product, it may be stored in a computer-readable storage medium. Based on such an understanding, the technical solutions of the embodiments of the present disclosure, in essence, or some contributing to the related art, or all or some of the technical solutions, may be embodied in the form of a software product, the computer software product is stored in a storage medium and includes several instructions for enabling a computer device (which may be a personal computer, a server, or a network device, etc.) or a processor to perform all or some of the steps of the methods in the embodiments of the present disclosure. The storage medium storing a computer software product includes various types of media capable of storing program codes, such as a USB flash drive, a mobile disk, a read-only memory (ROM), a random-access memory (RAM), a magnetic disk, or an optical disk, etc.

In a case where the functions of the above integrated modules are implemented in the form of hardware, the embodiments of the present disclosure provide a structural schematic diagram of a communication apparatus. As shown in FIG. 5, the communication apparatus 50 includes: a processor 502, a communication interface 503, and a bus 504. In some embodiments, the communication apparatus 50 may also include a memory 501.

The processor 502 may be configured to implement or execute the various exemplary logic blocks, modules, and circuits described in connection with the content of the present disclosure. The processor 502 may be a central processing unit, a general-purpose processor, a digital signal processor, an application specific integrated circuit, a field programmable gate array or other programmable logic device, a transistor logic device, a hardware component, or any combination thereof, which may implement or execute the various exemplary logic blocks, modules, and circuits described in connection with the content of the present disclosure. The processor 502 may also be a combination that implements computing functions, for example, including a combination of one or more microprocessors, a combination of a DSP (digital signal processor) and a microprocessor, or the like.

The communication interface 503 is configured to connect to other devices through a communication network. The communication network may be an Ethernet, a wireless access network, wireless local area networks (WLAN), or the like.

The memory 501 may be, but be not limited to, a read-only memory (ROM) or other types of static storage devices capable of storing static information and instructions, a random access memory (RAM) or other types of dynamic storage devices capable of storing information and instructions, or may also be an electrically erasable programmable read-only memory (EEPROM), a magnetic disk storage medium or other magnetic storage devices, or any other medium capable of being used to carry or store the desired program codes in the form of instructions or data structures and capable of being accessed by a computer.

As an implementation, the memory 501 may exist independently of the processor 502; the memory 501 may be connected to the processor 502 via the bus 504 for storing instructions or a program code. When the processor 502 invokes and executes the instructions or the program code stored in the memory 501, it can implement the determination method for the information processing mode provided in the embodiments of the present disclosure.

In another implementation, the memory 501 may be integrated with the processor 502.

The bus 504 may be an extended industry standard architecture (EISA) bus or the like. The bus 504 may be divided into an address bus, a data bus, a control bus, and the like. For ease of representation, only one thick line is used in FIG. 5 for representation, but this does not mean that there is only one bus or one type of bus.

From the description of the above implementations, those skilled in the art may clearly understand that, for convenience and brevity of description, an illustration is only provided by the division of functional modules mentioned above. In practical applications, the functions mentioned above may be allocated to be completed by different functional modules according to requirements. That is, the internal structure of the device or apparatus is divided into different functional modules to complete all or some of the functions mentioned above.

The embodiments of the present disclosure further provide a computer-readable storage medium (for example, a non-transitory computer-readable storage medium). All or some of the processes in the above method embodiments may be completed by computer instructions indicating relevant hardware. The program may be stored in the above computer-readable storage medium. When the program is executed, it may include the processes of the above method embodiments. The computer-readable storage medium may be an internal storage of any of the foregoing embodiments. The above computer-readable storage medium may also be an external storage device of the above device or apparatus, for example, a plug-in hard disk, a smart media card (SMC), a secure digital (SD) card, a flash card, or the like equipped on the above device or apparatus. Furthermore, the above computer-readable storage medium may also include both the internal storage unit and the external storage device of the above device or apparatus. The above computer-readable storage medium is configured to store the above computer program and other programs and data required by the above device or apparatus. The above computer-readable storage medium may also be configured to temporarily store data that has been output or is to be output.

The embodiments of the present disclosure further provide a computer program product. The computer product includes a computer program. When the computer program product runs on a computer, it causes the computer to perform any of the methods provided in the above embodiments.

Based on the technical solutions provided in the present disclosure, L CSI reports may be configured simultaneously, and the L CSI reports have a correlation. Furthermore, the configuration of a part of parameters of at least one CSI report among the L CSI reports may be modified via MAC CE and/or physical layer signaling, thereby improving the flexibility of channel state information reporting, without reconfiguring CSI report via higher layer signaling, which may reduce signaling delay.

Although the present disclosure is described herein in conjunction with various embodiments, however, in the process of implementing the claimed present disclosure, those skilled in the art may understand and implement other variations of the disclosed embodiments by viewing the drawings, the disclosed content, and the appended claims. In the claims, the word "comprising" or its variations does not exclude other components or steps, and "a" or "an" does not exclude the case of multiple. A single processor or other unit may implement several functions listed in the claims. Some measures are recorded in dependent claims that are different from each other, but this does not mean that these measures cannot be combined to produce good effects.

Although the present disclosure is described in conjunction with specific features and their embodiments, it is obvious that various modifications and combinations may be made without departing from the spirit and scope of the present disclosure. Correspondingly, the specification and the drawings are merely exemplary illustrations of the present disclosure defined by the appended claims, and are considered to cover any of and all modifications, variations, combinations, or equivalents within the scope of the present disclosure. Obviously, those skilled in the art may make various changes and modifications to the present disclosure without departing from the spirit and scope of the present disclosure. Thus, if these modifications and variations of the present disclosure fall within the scope of the claims of the present disclosure and their equivalent technologies, the present disclosure is also intended to cover these modifications and variations.

The above description is only specific implementations of the present disclosure, but the protection scope of the present disclosure is not limited thereto. Any changes or substitutions within the technical scope disclosed by the present disclosure shall be covered within the protection scope of the present disclosure. Therefore, the protection scope of the present disclosure should be based on the protection scope of the claims.

**Claims**

1. A transmission method for channel state information report configuration, comprising:

    acquiring a channel state information (CSI) report configuration, wherein the CSI report configuration comprises parameter information of L CSI reports, the L CSI reports correspond to C reference signal resource sets, and both L and C are positive integers greater than 1; and
    sending the CSI report configuration.

2. The method according to claim 1, wherein the CSI report configuration further comprises configuration information of the C reference signal resource sets.

3. The method according to claim 1, wherein the L CSI reports and/or the C reference signal resource sets are configured before a first slot; or, CSI report configuration corresponding to the L CSI reports and/or configuration information of the C reference signal resource sets are sent before the first slot; wherein the first slot satisfies any one of:

    the first slot being a minimum slot for sending the L CSI reports;
    the first slot being a slot for sending a first CSI report among the L CSI reports;
    the first slot being a minimum slot for sending a reference signal resource in the C reference signal resource sets;
    the first slot being a slot for sending a first reference signal resource in the C reference signal resource sets.

4. The method according to claim 1, wherein the L CSI reports are periodic CSI reports or semi-persistent CSI reports.

5. The method according to claim 1, wherein each CSI report of the L CSI reports corresponds to a reference signal resource set.

6. The method according to claim 1, wherein a CSI report among the L CSI reports corresponds to N reference signal resource sets, M CSI reports among the L CSI reports each correspond to a reference signal resource set, N is an integer greater than 1, M is a positive integer, and L = M + 1, C = N + M; or, a CSI report among the L CSI reports corresponds to N reference signal resource sets, 2*M CSI reports among the L CSI reports each correspond to a reference signal resource set; N is an integer greater than 1, M is a positive integer, and L = 2*M + 1, C = N + 2*M.

7. The method according to claim 1, further comprising:

sending first signaling, wherein the first signaling is used to indicate a parameter of at least one CSI report among the L CSI reports.

8. The method according to claim 7, wherein the first signaling is a medium access control element (MAC CE) or downlink control information (DCI).

9. The method according to claim 7, wherein the parameter of the CSI report comprises at least one of following parameters:
a configuration index of resources For Channel Measurement, a configuration index of CSI-IM-Resources For Interference, a carrier parameter, a report Config Type, a report quantity parameter, a frequency domain configuration parameter of a report, a configuration parameter of a channel quality indicator, a codebook Config parameter, a non-PMI-Port Indication, a beam prediction indication, and a function indication.

10. The method according to claim 1, further comprising:
sending second signaling, wherein the second signaling is used to indicate a parameter of at least one reference signal resource set among the C reference signal resource sets.

11. The method according to claim 10, wherein the parameter of the at least one reference signal resource set among the C reference signal resource sets comprises at least one of:
nzp-CSI-RS-ResourcesList, repetition, aperiodicTriggeringOffset, TRS-Info, and aperiodicTriggeringOffset-r16.

12. The method according to claim 1, further comprising:
sending third signaling, wherein the third signaling is used to indicate a parameter of at least one reference channel resource of the C reference signal resource sets.

13. The method according to claim 12, wherein the parameter of the at least one reference signal resource of the C reference signal resource sets comprises at least one of:
periodicity And Offset, power Control Offset relative to data, power Control OffsetSS, qcl-InfoPeriodicCSI-RS, resource Mapping, and scrambling ID.

14. The method according to claim 1, wherein a time interval between a first CSI report and a second CSI report among two CSI reports adjacent in time domain among the L CSI reports, is greater than or equal to a sum of a first time interval and a second time interval; wherein the first time interval is a difference between time of a first symbol of an uplink physical channel for sending the first CSI report and time of a first symbol for receiving a first channel state information reference signal resource, and the second time interval is an interval between the time of the first symbol for receiving the first channel state information reference signal resource and time of a last symbol of an uplink physical channel for sending the second CSI report.

15. The method according to claim 1, wherein a time interval between a second CSI report and a third CSI report among three CSI reports adjacent in time domain among the L CSI reports, is greater than or equal to a sum of a third time interval and a fourth time interval; wherein the third time interval is a difference between time of a first symbol of an uplink physical channel for sending the second CSI report and time of a first symbol for receiving a second channel state information reference signal resource, and the fourth time interval is a difference between the time of the first symbol for receiving the second channel state information reference signal resource and time of a last symbol of an uplink physical channel for sending the third CSI report.

16. The method according to claim 1, wherein a content of a second CSI report is determined according to a content of a first CSI report, among two CSI reports adjacent in time domain.

17. The method according to claim 16, wherein determining the content of the second CSI report according to the content of the first CSI report, comprises at least one of:

   determining a reference signal resource corresponding to the second CSI report according to the content of the first CSI report; or
   determining a number of CSI parameters in the second CSI report according to the content of the first CSI report; or
   determining whether the content of the second CSI report is a null value according to the content of the first CSI report.

18. The method according to claim 1, wherein a content of a second CSI report is determined according to a content of a first CSI report, and/or a content of a third CSI report is determined according to the content of the second CSI report, among three CSI reports adjacent in time domain.

19. The method according to claim 1, wherein the L CSI reports are aperiodic CSI reports; and the method further comprises:
   sending fourth signaling, wherein the fourth signaling is used to activate the L CSI reports, and the fourth signaling is physical layer signaling.

20. The method according to claim 19, wherein the CSI report configuration further comprises L CSI report slot offsets, and the L CSI report slot offsets satisfy a first condition.

21. The method according to claim 19, wherein the CSI report configuration further comprises C reference signal resource slot offsets, and the C reference signal resource slot offsets satisfy a second condition.

22. A communication apparatus, comprising: a memory and a processor; wherein the memory is coupled to the processor; the memory is configured to store instructions executable by the processor; and the processor, upon executing the instructions, performs the method according to any one of claims 1 to 21.

23. A computer-readable storage medium, wherein the computer-readable storage medium stores computer instructions, and when the computer instructions are executed on a communication apparatus, the communication apparatus performs the method according to any one of claims 1 to 21.

<u>10</u>

Base
station 21

Base
station 22

Terminal 31          Terminal 32          Terminal 33          Terminal 34

FIG. 1

| Acquire a CSI report configuration, wherein the CSI report configuration comprises parameter information of L CSI reports, the L CSI reports corresponding to C reference signal resource sets | S101 |

↓

| Transmit the CSI report configuration | S102 |

FIG. 2

| Receive a CSI report configuration, where the CSI report configuration includes parameter information of L CSI reports, and the L CSI reports correspond to C reference signal resource sets | S201 |

FIG. 3

Communication
apparatus 40

Acquiring
module 401

Sending
module 402

FIG. 4

Communication apparatus 50

502 503

Processor Communication
Interface

Bus
504 Memory

501

FIG. 5

## INTERNATIONAL SEARCH REPORT

| International application No. |
| --- |
| **PCT/CN2024/088869** |

| A. | CLASSIFICATION OF SUBJECT MATTER |
| --- | --- |

H04L 1/00(2006.01)i

According to International Patent Classification (IPC) or to both national classification and IPC

| B. | FIELDS SEARCHED |
| --- | --- |

Minimum documentation searched (classification system followed by classification symbols)

IPC:H04

Documentation searched other than minimum documentation to the extent that such documents are included in the fields searched

Electronic data base consulted during the international search (name of data base and, where practicable, search terms used)

3GPP, CNTXT, DWPI, ENTXT, OETXT, VEN, WPABS: CSI报告, CSI报告配置, 参考信号资源集合, 信道状态信息报告, CSI, "reference signal resource sets", "CSI reports", "channel state information reports"

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | CN 113994605 A (QUALCOMM INC.) 28 January 2022 (2022-01-28) description, pages 12-22 | 1-5, 7-13, 19-23 |
| A | US 2021105753 A1 (APPLE INC.) 08 April 2021 (2021-04-08) entire document | 1-23 |

☐ Further documents are listed in the continuation of Box C.   ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **05 August 2024** | **05 August 2024** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

International application No.

**PCT/CN2024/088869**

| Patent document cited in search report | | | Publication date (day/month/year) | Patent family member(s) | | | Publication date (day/month/year) |
|---|---|---|---|---|---|---|---|
| CN | 113994605 | A | 28 January 2022 | WO | 2020252765 | A1 | 24 December 2020 |
| | | | | WO | 2020253585 | A1 | 24 December 2020 |
| | | | | EP | 3987683 | A1 | 27 April 2022 |
| | | | | EP | 3987683 | A4 | 13 September 2023 |
| | | | | US | 2022329308 | A1 | 13 October 2022 |
| | | | | US | 11984958 | B2 | 14 May 2024 |
| US | 2021105753 | A1 | 08 April 2021 | US | 11405911 | B2 | 02 August 2022 |
| | | | | US | 2019174466 | A1 | 06 June 2019 |
| | | | | US | 10863494 | B2 | 08 December 2020 |

Form PCT/ISA/210 (patent family annex) (July 2022)

**REFERENCES CITED IN THE DESCRIPTION**

**Patent documents cited in the description**

- CN 202311286337